(19) 

**Europäisches Patentamt**
**European Patent Office**
**Office européen des brevets**

(11) **EP 4 432 155 B1**

(12) **EUROPEAN PATENT SPECIFICATION**

(45) Date of publication and mention
of the grant of the patent:
**25.02.2026 Bulletin 2026/09**

(21) Application number: **22892034.4**

(22) Date of filing: **10.11.2022**

(51) International Patent Classification (IPC):
***G06F 30/27*** (2020.01)   ***G06N 3/045*** (2023.01)
***G06N 3/0464*** (2023.01)   ***G06N 3/098*** (2023.01)
***G06N 3/0895*** (2023.01)   ***G06V 10/82*** (2022.01)
***G06V 20/62*** (2022.01)   ***G06F 18/214*** (2023.01)
***G06N 3/063*** (2023.01)

(52) Cooperative Patent Classification (CPC):
**G06F 18/214; G06N 3/045; G06N 3/0464;**
**G06N 3/0895; G06N 3/098; G06V 10/82;**
**G06V 20/625;** G06N 3/063

(86) International application number:
**PCT/CN2022/131038**

(87) International publication number:
**WO 2023/083240 (19.05.2023 Gazette 2023/20)**

(54) **METHOD AND APPARATUS FOR TRAINING INTELLIGENT MODEL, AND ELECTRONIC DEVICE AND STORAGE MEDIUM**

VERFAHREN UND VORRICHTUNG ZUM TRAINIEREN EINES INTELLIGENTEN MODELLS SOWIE ELEKTRONISCHE VORRICHTUNG UND SPEICHERMEDIUM

PROCÉDÉ ET APPAREIL D'ENTRAÎNEMENT DE MODÈLE INTELLIGENT, DISPOSITIF ÉLECTRONIQUE ET SUPPORT DE STOCKAGE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **10.11.2021 CN 202111329061**

(43) Date of publication of application:
**18.09.2024 Bulletin 2024/38**

(73) Proprietor: **Hangzhou Hikvision Digital Technology Co., Ltd.**
**Hangzhou, Zhejiang 310051 (CN)**

(72) Inventors:
• **MENG, Rang**
**Hangzhou, Zhejiang 310051 (CN)**
• **PU, Shiliang**
**Hangzhou, Zhejiang 310051 (CN)**
• **CHEN, Weijie**
**Hangzhou, Zhejiang 310051 (CN)**
• **YANG, Shicai**
**Hangzhou, Zhejiang 310051 (CN)**
• **XIE, Di**
**Hangzhou, Zhejiang 310051 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**CN-A- 107 851 213**       **CN-A- 111 492 381**
**CN-A- 112 070 207**       **CN-A- 113 366 496**
**CN-A- 114 118 236**       **JP-A- 2020 027 659**
**US-A1- 2021 089 883**   **US-A1- 2023 177 410**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 432 155 B1

- WANG JIAN ET AL: "LCS-EnsemNet: A Semisupervised Deep Neural Network for SAR Image Change Detection With Dual Feature Extraction and Label-Consistent Self-Ensemble", IEEE JOURNAL OF SELECTED TOPICS IN APPLIED EARTH OBSERVATIONS AND REMOTE SENSING, IEEE, USA, vol. 14, 26 October 2021 (2021-10-26), pages 11903 - 11925, XP011891256, ISSN: 1939-1404, [retrieved on 20211202], DOI: 10.1109/JSTARS.2021.3122461

**Description**

**TECHNICAL FIELD**

The present application relates to the field of computers, and in particular to methods, apparatuses for training an intelligent model, and electronic devices and machine-readable storage media.

**BACKGROUND**

Training samples include labeled training samples and unlabeled training samples. A labeled training sample include sample data and a label, while an unlabeled training sample include sample data. For example, suppose that the training samples are samples for training license plates, a labeled training sample includes a license plate image and a label, the label is used for a license plate position in the license plate image, and an unlabeled training sample includes the license plate image.

At present, a neural network can be trained with multiple training samples, including labeled training samples. By training the neural networks with the labeled training samples, an intelligent model with superior performance can be obtained. However, when the multiple training samples include both labeled training samples and unlabeled training samples, how to train an intelligent model with the same superiority is an urgent problem to be solved at present.

WANG JIAN ET AL: "LCS-EnsemNet: A Semisupervised Deep Neural Network for SAR Image Change Detection With Dual Feature Extraction and Label-Consistent Self-Ensemble", IEEE JOURNAL OF SELECTED TOPICS IN APPLIED EARTH OBSERVATIONS AND REMOTE SENSING, IEEE, USA, vol. 14, 26 October 2021 (2021-10-26), pages 11903-11925, ISSN: 1939-1404, DOI: 10.1109/JSTARS.2021.3122461 proposes a semi-supervised deep neural network-based method, LCS-EnsemNet, for change detection in SAR images. The method enhances class separability by generating a spatially enhanced difference image (SE DI) through the combination of a pixel-wise log-ratio difference image and a saliency map. Simultaneously, it constructs pixel-wise and context-wise features, leveraging a two-branch network, LCS-EnsemNet, to independently learn detailed and contextual information. Through a label-consistent self-ensemble strategy, the method optimizes pseudo-label selection, enabling semi-supervised learning. Experimental results demonstrate the method's high efficiency across multiple SAR datasets.

CN112070207A discloses a model training method, which is applied to the field of artificial intelligence, and comprises the steps of sending a first sub-model to first equipment, wherein the first sub-model is obtained by compressing a model to be trained; receiving a first gradient sent by the first device, wherein the first gradient is obtained when the first device trains the first sub-model; and performing model training on the to-be-trained model at least based on the first gradient to obtain an updated to-be-trained model.

CN114118236A relates to a method and device for training an intelligent model, and belongs to the field of computers. The method comprises the following steps: acquiring a first network set and a second network set from a first neural network; based on the first sample set and the second sample set, training each neural network in the first network set to obtain a first model set; and based on the first sample set, the second sample set and the first model set, training each neural network in the second network set to obtain a second model set, the second model set comprising m second intelligent models obtained by training the m second neural networks

CN107851213A discloses a method of transfer learning includes receiving second data and generating, via a first network, second labels for the second data. In one configuration, the first network has been previously trained on first labels for first data. Additionally, the second labels are generated for training a second network.

**SUMMARY**

In order to address problems in the related art, embodiments of the present application provide methods and apparatuses for training an intelligent model, and electronic devices and machine-readable storage media.

The invention is set out in the appended set of claims.

On the one hand, the present application provides a computer-implemented method in accordance with independent claim 1.

Optionally, obtaining the first model set by training each neural network in the first network set based on the first sample set and the second sample set includes: for any one to-be-trained neural network in the first network set, training, based on the first sample set, parameters of a convolutional layer and parameters of a fully connected layer included in the to-be-trained neural network, where values of the trained parameters of the convolutional layer are first parameter values and values of the trained parameters of the fully connected layer are second parameter values; training, with fixing the values of the parameters of the convolutional layer to the first parameter values, the parameters of fully connected layer included in the to-be-trained neural network based on the first sample set and the second sample set, so to change the values of the trained parameters of the fully connected layer from the second parameter values to third parameter values;

and training, with fixing the values of the parameters of the fully connected layer to the third parameter values, the parameters of convolutional layer in the to-be-trained neural network based on the first sample set and the second sample set, so to obtain an intelligent model corresponding to the to-be-trained neural network.

Optionally, training the parameters of the fully connected layer included in the to-be-trained neural network based on the first sample set and the second sample set includes: for each of the first training samples in the first sample set, acquiring a first output result corresponding to the first training sample output from the to-be-trained neural network by inputting the first training sample into the to-be-trained neural network, and for each of the second training samples in the second sample set, acquiring a first output result corresponding to the second training sample by inputting the second training sample into the to-be-trained neural network; acquiring a first loss function value through a first loss function based on the first output result corresponding to each of the first training samples and the label included in each of the first training samples, and acquiring a second loss function value through a distance loss function based on the first output result corresponding to each of the second training samples, where the first loss function includes a loss function other than the distance loss function; and when a loss function value of the fully connected layer is not minimum, adjusting the values of parameters of the fully connected layer based on the loss function value of the fully connected layer, where the loss function value of the fully connected layer includes the first loss function value and the second loss function value.

Optionally, training the parameters of the convolutional layer in the to-be-trained neural network based on the first sample set and the second sample set includes: for each of the first training samples in the first sample set, acquiring a second output result corresponding to the first training sample output from the to-be-trained neural network by inputting the first training sample into the to-be-trained neural network, and for each of the second training samples in the second sample set, acquiring a second output result corresponding to the second training sample by inputting the second training sample into the to-be-trained neural network; acquiring a third loss function value through the first loss function based on the second output result corresponding to each of the first training samples and the label included in each of the first training samples, and acquiring a fourth loss function value through the distance loss function based on the second output result corresponding to each of the second training samples; and when a loss function value of the convolutional layer is not minimum, adjusting the values of parameters of the convolutional layer based on the loss function value of the convolutional layer, where the loss function value of the convolutional layer includes the third loss function value and the fourth loss function value

Optionally, the method is applied to a system with an architecture of central computing-edge devices, the system includes a central device and a plurality of edge intelligent devices, the edge intelligent devices are deployed in different areas, and computing power and storage capacity of the central device both are greater than computing power and storage capacity of each of the edge intelligent devices, the method is performed by the central device, and the second training samples in the second sample set include data collected by each of the edge intelligent devices and received by the central device.

On the other hand, the present application provides an apparatus in accordance with independent claim 6.

Optionally, the first training module is configured to: for any one to-be-trained neural network in the first network set, train, based on the first sample set, parameters of a convolutional layer and parameters of a fully connected layer included in the to-be-trained neural network, where values of the trained parameters of the convolutional layer are first parameter values and values of the trained parameters of the fully connected layer are second parameter values; train, with fixing the values of the parameters of the convolutional layer to the first parameter values, the parameters of the fully connected layer included in the to-be-trained neural network based on the first sample set and the second sample set, so as change the values of the trained parameters of the fully connected layer from the second parameter values to third parameter values; and train, with fixing the values of the parameters of the fully connected layer to the third parameter values, the parameters of the convolutional layer in the to-be-trained neural network based on the first sample set and the second sample set, so to obtain an intelligent model corresponding to the to-be-trained neural network.

Optionally, the first training module is configured to: for each of the first training samples in the first sample set, acquire a first output result corresponding to the first training sample output from the to-be-trained neural network by inputting the first training sample into the to-be-trained neural network, and for each of the second training samples in the second sample set, acquire a first output result corresponding to the second training sample by inputting the second training sample into the to-be-trained neural network; acquire a first loss function value through a first loss function based on the first output result corresponding to each of the first training samples and the label included in each of the first training samples, and acquire a second loss function value through a distance loss function based on the first output result corresponding to each of the second training samples, where the first loss function includes a loss function other than the distance loss function; and when a loss function value of the fully connected layer is not minimum, adjust the values of parameters of the fully connected layer based on the loss function value of the fully connected layer, where the loss function value of the fully connected layer includes the first loss function value and the second loss function value

Optionally, the first training module is configured to: for each of the first training samples in the first sample set, acquire a second output result corresponding to the first training sample output from the to-be-trained neural network by inputting the first training sample into the to-be-trained neural network, and for each of the second training samples in the second sample set, acquire a second output result corresponding to the second training sample by inputting the second training sample into the to-be-trained neural network; acquire a third loss function value through the first loss function based on the second output result corresponding to each of the first training samples and the label included in each of the first training samples, and acquire a fourth loss function value through the distance loss function based on the second output result corresponding to each of the second training samples; and when a loss function value of the convolutional layer is not minimum, adjust the values of parameters of the convolutional layer based on the loss function value of the convolutional layer, where the loss function value of the convolutional layer includes the third loss function value and the fourth loss function value.

In a further aspect, the present application provides an electronic device in accordance with independent claim 7.

In a yet another aspect, the present application provides a machine-readable storage medium, in accordance with independent claim 8.

The technical solutions provided in the embodiments of the present application include the following beneficial effects.

A first neural network is divided into a first network set and a second network set, the first neural network includes the first neural network and m-1 second neural networks, and the second network set includes m second neural networks. The first training samples included in the first sample set are labeled training samples, and the second training samples included in the second sample set are unlabeled training samples. Since the scales of the neural networks in the first network set are all larger than those in the second network set, that is, the second training samples in the second sample set are used as the unlabeled training sample, each neural network in the first network set is also trained by using the first sample set and the second sample set to obtain the intelligent model corresponding to each neural network in the first network set, and the first model set is obtained. Then, each neural network in the second network set with smaller network scale is trained by using the first model set, the first sample set and the second sample set, so that the intelligent model corresponding to each neural network in the second network set is trained, so that both labeled training samples and unlabeled training samples can be included, and the intelligent model with superior performance can also be trained.

It should be understood that the above general descriptions and the following detailed descriptions are merely for exemplary and explanatory purposes, and cannot limit the present application.

## BRIEF DESCRIPTION OF DRAWINGS

The accompanying drawings, which are incorporated in and constitute a part of the present description, illustrate embodiments consistent with the present application and serve to explain the principles of the present application together with the description.

FIG. 1 is a schematic structural diagram of a neural network according to an embodiment of the present application.
FIG. 2 is a schematic structural diagram of another neural network according to an embodiment of the present application.
FIG. 3 is a schematic structural diagram of a network architecture according to an embodiment of the present application.
FIG. 4 is a flowchart of a method of training an intelligent model according to an embodiment of the present application.
FIG. 5 is a flowchart of another method of training an intelligent model according to an embodiment of the present application.
FIG. 6 is a flowchart of another method of training an intelligent model according to an embodiment of the present application.
FIG. 7 is a flowchart of another method of training an intelligent model according to an embodiment of the present application.
FIG. 8 is a schematic structural diagram of an apparatus for training an intelligent model according to an embodiment of the present application.
FIG. 9 is a schematic structural diagram of an electronic device according to an embodiment of the present application.

The examples of the present application are clearly illustrated by the above accompanying drawings, which will be described below in more detail. The accompanying drawings and text descriptions are intended to explain the concept of the present application for persons skilled in the art with reference to specific examples, rather than limit the scope of the present application, which is defined by the appended claims.

## DETAILED DESCRIPTION

Exemplary embodiments will be described in detail here, examples of which are illustrated in the accompanying drawings. When the following description relates to the accompanying drawings, unless specified otherwise, the same numerals in different accompanying drawings represent the same or similar elements. The implementations described in the following embodiments do not represent all implementations consistent with the present application. Rather, they are merely embodiments of apparatuses and methods consistent with the invention defined in the appended claims.

A first neural network is a large-scale neural network, and the first neural network can be named as a hypernetwork. The first neural network includes a large number of sub-networks.

The first neural network includes a large number of neurons. By dividing the neurons included in the first neural network according to different depths, widths, convolutions, and sizes, a large number of sub-networks can be divided in the first neural network.

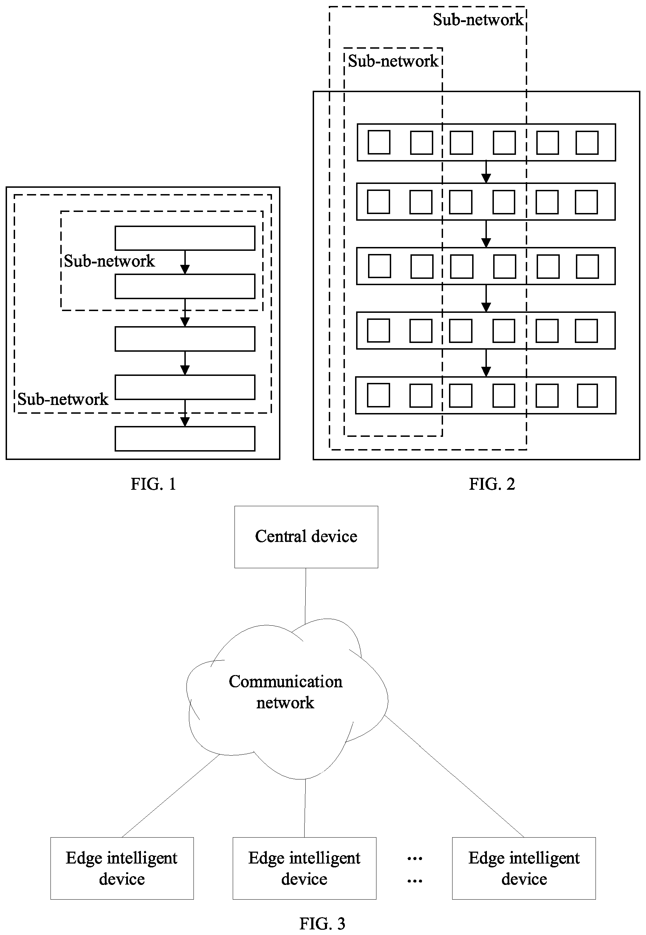

Referring to FIG. 1, neurons in the first neural network are divided into a plurality of different sub-networks by different depths. Or, referring to FIG. 2, neurons in the hypernetwork are divided into a plurality of different sub-networks by dividing the first neural network by different widths.

Each sub-network in the first neural network is a neural network, and training samples are used to train the neural network to obtain an intelligent model with required functions. For example, in order to be able to recognize a license plate, the neural network can be trained with training samples, and a license plate recognition model with license plate recognition function can be obtained

For any neural network, the neural network includes a convolutional layer and a fully connected layer, and the convolutional layer is used to extract features from training samples. The fully connected layer processes targets in the training samples based on the extracted features. For example, the fully connected layer classifies a target in the training sample based on the extracted features

Optionally, the convolutional layer includes a feature extractor, and the fully connected layer includes a plurality of classifiers. The feature extractor belongs to the convolutional layer in the neural network and is configured to extract features from the training samples. For each classifier, the classifier classifies the target in the training sample based on the features extracted by the feature extractor.

The training samples are divided into two categories: labeled training samples and unlabeled training samples. The labeled training samples include training data and labels, and the labels are used to indicate the targets in the training data. For example, for a training sample used to train a license plate recognition model, training data in the training sample is a picture including a license plate, and a label in the training sample is used to indicate a location of the license plate in the picture, and the training sample is a labeled training sample. The unlabeled training samples include training data. For example, for a training sample used to train the license plate recognition model, the training sample includes a picture, the picture includes a license plate image, and the training sample is an unlabeled training sample.

The above intelligent model takes the license plate recognition model as an example, but the intelligent model can further be an intelligent model for semantic segmentation, an intelligent model for target detection, an intelligent model for key point detection and/or an intelligent model for video understanding. These intelligent models can be obtained by training neural networks with training samples.

No matter what kind of intelligent model, the classifiers of the fully connected layer classify the training data in the training samples. As for the license plate recognition model mentioned above, the classifiers classify each image in the training sample. When a certain image is classified as a license plate image in the training sample, a location of that license plate image is used as a license plate location. For another example, for the intelligent model used to realize semantic segmentation, the classifiers classify semantics of each data content in the training sample and classify the data content with different semantics to realize semantic segmentation.

An embodiment of the present application provides a first sample set and a second sample set, where the first sample set includes a plurality of first training samples, each first training sample includes first training data and a label, and the label indicates a target in the first training data, the second sample set includes a plurality of second training samples, each second training sample includes second training data. Each first training sample in the first sample set is a labeled training sample, and each second training sample in the second sample set is an unlabeled training sample.

Based on the first sample set and the second sample set, a first neural network and each sub-network included in the first neural network are trained to obtain an intelligent model corresponding to the first neural network and an intelligent model corresponding to each sub-network. Since a scale of each sub-network of the first neural network is different, a scale of the intelligent model corresponding to the trained first neural network is different from that of the intelligent model corresponding to each sub-network, so that intelligent models with different scales can be deployed on devices with different hardware performance.

The first training sample in the first sample set and the second training sample in the second sample set may be training samples in different environments. For example, taking the license plate recognition model as an example, each first training sample in the first sample set may be a sample obtained by shooting various license plates in daytime, and each second training sample in the second sample set may be a sample obtained by shooting various license plates at night. In this way, the license plate recognition model trained by the first sample set and the second sample set can not only recognize the license plate during the day, but also recognize the license plate at night.

Referring to FIG. 3, an embodiment of the present application provides a network architecture that includes a central device and a plurality of edge intelligent devices, each edge intelligent device communicating with the central device.

Optionally, each edge intelligent device and central device are connected to a communication network, and each edge intelligent device establishes a network connection with the central device in the communication network, so as to realize communication between each edge intelligent device and the central device. There are other ways to realize the communication between each edge intelligent device and the central device, which will not be described in detail here.

The computing power and storage capacity of each edge intelligent device are far less than those of the central device respectively, and the computing power and storage capacity of each edge intelligent device may be different.

The central device includes a first sample set, in which each first training sample includes first training data and label (s), the label(s) is used to indicate target(s) included in the first training data.

Optionally, the label(s) included in each first training sample may be obtained by labeling each first training sample separately using manual means.

Each edge intelligent device is deployed in a different area, and each edge intelligent device collects the area where it is located, takes the collected data as a second training sample, and sends the second training sample to the central device. Because the number of edge intelligent devices is often large, each edge intelligent device collects a large number of second training samples, so the central device will get a large number of second training samples. If the second training samples continue to be labeled manually, the labor cost is too high, so the central device takes the data collected by each edge intelligent device directly as the second training sample, and composes each second training sample into a second sample set. Then, the central device trains a hypernetwork based on the first and second sample sets, and trains the hypernetwork into multiple intelligent models of different scales. Each intelligent model requires different computing and storage capabilities of the device. The central device installs different intelligent models to different edge intelligent devices.

For each edge intelligent device, each edge intelligent device is deployed in a different scene. Since each edge intelligent device is affected by the environment in which it is located, a scene corresponding to the second training sample collected by each edge intelligent device is different from a scene corresponding to the respective first training sample in the central device.

Optionally, the central device is a central server. For example, the central device is a cloud computing server or a cloud computing server cluster. The edge intelligent device is a smart camera, a computer or a single-chip computer.

Optionally, the network architecture is a central computing-edge device system architecture, for example, it can be a cloud center computing-edge device system architecture, that is, a central device is a server or server cluster with large-scale computing and storage capabilities (for example, a server cluster consists of 200 graphics cards, 100 CPUs and 100T storage hard disks), and a plurality of edge intelligent devices refer to edge devices with multiple small-scale computing and storage capabilities, e.g., an edge intelligent device is a server with a smaller scale than a server cluster (e.g., a computer with no or fewer graphics cards; a microcontroller), a camera with a certain intelligent model-carrying capability, or smart glasses with smaller computing power.

The network architecture shown in FIG. 3 is applied to an intelligent wildlife protection monitoring system. The system consists of a cloud computing center (as the central device) and multiple edge intelligent devices.

The cloud computing center is a server cluster, which has strong hardware computing capacity and storage capacity, and can use a pre-selected tagged wildlife data (the first training sample). The cloud computing center can train the hypernetwork using labeled first training samples to obtain a hypernetwork model. Edge intelligent devices, including smart cameras installed in different wildlife protection areas, are configured to collect and process image data, and identify and monitor potential wildlife. Smart cameras, with different models, are devices with an ability to run intelligent models, so their computing and storage capabilities are different. However, compared with the cloud computing center, computing and storage capabilities of the smart cameras are very limited, and they may not be able to directly run the hypernetwork model trained by the cloud computing center to complete a task.

The amount of data collected by smart cameras is huge, and it is expensive to label wildlife targets in the images by manpower. Different smart cameras are affected by their environment, and the data collected and processed by the smart cameras have different scenes compared with the first training samples in the cloud computing center.

Different smart cameras need to send their own computing and storage condition information and a series of collected unlabeled image information (as the second training samples) to the cloud computing center, then the cloud computing center trains the hypernetwork according to these unlabeled image information and the first training samples included by itself through the training method provided by the present application, and trains an intelligent model that meets the computing power, storage capacity and scene conditions of each smart camera. In this way, for different cameras, a camera can be equipped with an intelligent model that meets the conditions (its own computing power, storage capacity and scene conditions), and then process the collected images to perform the task of intelligent wildlife monitoring.

In the above process, if the training method of the present application is not used, it may be necessary to train different models for different smart cameras to meet their respective computing power requirements and scene requirements for processing data, and if a new camera device is added to the system, it needs to be retrained, which leads to low sustainability and flexibility of the system. However, the training method of the present application only trains a hypernetwork model, and a customized intelligent model can be obtained by collecting the computing power and storage capacity information of different smart cameras and the collected unlabeled data (i.e., the second training samples). It saves separate training cost of different models required by different smart cameras and manual labeling cost of different scene data collected by different smart cameras.

The intelligent wildlife protection monitoring system mentioned above can also be replaced by other tasks. For example, monitoring tasks in dangerous environments: such as person/object intrusion warning systems in ultra-high voltage power grid substation areas, identification systems for operations that violate safety regulations on large-scale production lines, etc. It can also be a smart transportation system composed of smart city public service system, different road monitoring devices, smart traffic command center and different road electronic camera devices.

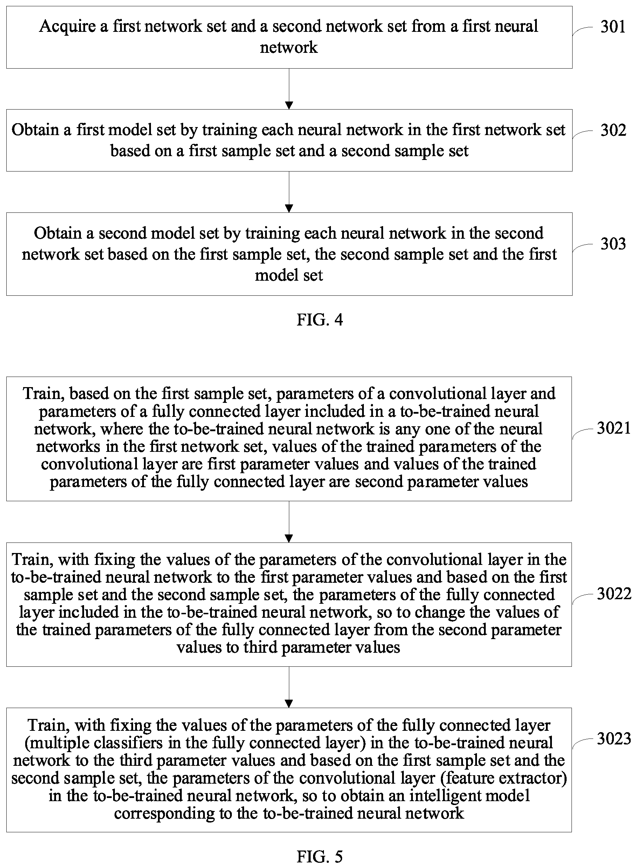

Referring to FIG. 4, an embodiment of the present application provides a method for training an intelligent model, which is applied to the network architecture shown in FIG. 3, and an execution subject of the method is the central device in the network architecture, and the method is used for training a first neural network to obtain a first intelligent model corresponding to the first neural network and a second intelligent model corresponding to each of a plurality of sub-networks in the first neural network, including the following steps.

At step 301: a first network set and a second network set are acquired from a first neural network, where the first network set includes the first neural network and m-1 second neural networks, m is an integer greater than 1, the second network set includes m second neural networks, the m-1 second neural networks and the m second neural networks are different sub-networks in the first neural network, and a network size of each neural network in the first network set is larger than a network size of each neural network in the second network set.

At step 302: a first model set is obtained by training each neural network in the first network set based on a first sample set and a second sample set, where the first sample set includes a plurality of first training samples, each of the first training samples includes first training data and a label to indicate a target in the first training data, the second sample set includes a plurality of second training samples, each of the second training samples includes second training data, and the first model set includes a first intelligent model obtained by training the first neural network and m-1 second intelligent models obtained by training the m-1 second neural networks.

Optionally, the central device receives data collected by each edge intelligent device and takes the data collected by each edge intelligent device as the second training sample. For example, the data collected by each edge intelligent device is pictures, etc.

At step 303: a second model set is obtained by training each neural network in the second network set based on the first sample set, the second sample set and the first model set, where the second model set includes m second intelligent models obtained by training the m second neural networks

A first neural network is divided into a first network set and a second network set, the first neural network includes the first neural network and m-1 second neural networks, and the second network set includes m second neural networks. The first training samples included in the first sample set are labeled training samples, and the second training samples included in the second sample set are unlabeled training samples. Since the scales of the neural networks in the first network set are all larger than those in the second network set, that is, the second training samples in the second sample set are used as the unlabeled training samples, each neural network in the first network set is also trained by using the first sample set and the second sample set to obtain the intelligent model corresponding to each neural network in the first network set, and the first model set is obtained. Then, each neural network in the second network set with smaller network scale is trained by using the first model set, the first sample set and the second sample set, so that the intelligent model corresponding to each neural network in the second network is be trained, so that both labeled training samples and unlabeled training samples can be included, and the intelligent model with superior performance can also be trained.

In this case, the unlabeled training samples are all collected from different edge intelligent devices, and each edge intelligent device is deployed in a different region, so each edge intelligent device is in a different scene. These unlabeled training samples constitute the second sample set, and the embodiment of the present application trains intelligent models with different scales based on the first sample set and the second sample set, so that each intelligent model can meet different scene conditions. Because intelligent models with different scales have different requirements for computing power and storage capacity of edge intelligent devices, intelligent models with different scales can be deployed on different edge intelligent devices.

Because the first model set is trained, for each second training sample in the second sample set, the training data in the second training sample is classified through the first model set including m intelligent models to obtain m processing results corresponding to each second training sample, and the label for each second training sample is obtained based on the m processing results corresponding to each second training sample, so that each neural network in the second network set can be trained based on each first training sample and the label for each second training sample, thus making each intelligent model in the second model set have a superior performance.

With respect to the method 300 shown in FIG. 4, each step in the method 300 will be described next

For the above step 301, in step 301, a first network set and a second network set are acquired from a first neural network, where the first network set includes the first neural network and m-1 second neural networks, the second network set includes m second neural networks, the m-1 second neural networks and the m second neural networks are different sub-networks of the first neural network, m is an integer greater than 1, and a network size of each neural network in the first network set is larger than a network size of each neural network in the second network set

In step 301, 2m neural networks are randomly selected from the hypernetwork. The 2m neural networks include the first neural network and 2m-1 sub-networks. The 2m-1 sub-networks are 2m-1 second neural networks. Among the 2m neural networks, the first neural network has the largest scale. From these 2m neural networks, m neural networks with the largest size are selected, the m neural networks include the first neural network and m-1 second neural networks with the largest size, the first neural network and the selected m-1 second neural networks are formed into a first network set, and the remaining m unselected second neural networks are formed into a second network set.

The number of sub-networks included in the first neural network is more than or equal to 2m-1, so after the above steps 301-303 are performed, 2m-1 second neural networks can be randomly selected from the first neural network, and the first neural network and the 2m-1 second neural networks will continue to perform the above operations of 301-303 until each sub-network in the first neural network is trained, and an intelligent model corresponding to each sub-network is obtained.

For the above step 302, refer to FIG. 5. In step 302, step 302 is realized by the following operations from 3021 to 3024. The operations of 3021 to 3024 are as follows.

At step 3021: based on the first sample set, parameters of a convolutional layer and parameters of a fully connected layer included in a to-be-trained neural network are trained, where the to-be-trained neural network is any one of the neural networks in the first network set, values of the trained parameters of the convolutional layer are first parameter values and values of the trained parameters of the fully connected layer are second parameter values.

The essence of training the parameters of convolutional layer is to train the parameters of feature extractor included in the convolutional layer, and the essence of training the parameters of fully connected layer is to train the parameters of each classifier included in the fully connected layer.

In step 3021, step 3021 is realized by the following operations from 11 to 14. The operations of 11 to 14 are as follows.

At 11: for each of the first training samples in the first sample set, the first training sample is input into the to-be-trained neural network, so that the to-be-trained neural network classifies a target included in the first training data in the first training sample to obtain a sixth output result corresponding to the first training sample.

For any one of first training samples, the sixth output result corresponding to the first training sample is used to indicate the target included in the first training data in the first training sample.

The to-be-trained neural network includes a convolutional layer and a fully connected layer. After the first training sample is input into the to-be-trained neural network, the convolutional layer in the to-be-trained neural network extracts a feature from the first training data in the first training sample, and inputs the feature to the fully connected layer in the to-be-trained neural network. Based on the feature, the fully connected layer performs a classification process on a target included in the first training data in the first training sample and outputs a processing result, and the output processing result is the sixth output result corresponding to the first training sample.

Each classifier included in the fully connected layer performs a classification process on the target included in the first training sample based on this feature, so the sixth output result corresponding to the first training sample output by the to-be-trained neural network includes the processing result output by each classifier.

For example, the feature extractor in the convolutional layer extracts a feature from the first training data in the first training sample, inputs the feature to each classifier in the to-be-trained neural network, and each classifier carries out a classification process on a target included in the first training data in the first training sample based on the feature, and outputs a processing result. The sixth output result corresponding to the first training sample includes the output result of each classifier.

At 12: based on the sixth output result corresponding to each of the first training samples, a fifth loss function value is obtained according to the following first loss function.

The first loss function is:

$$\begin{cases} s_1 = \min_{F_d, C_{d1}, C_{d2}, \ldots, C_{dz}} \sum_{(x,y) \in (x_s, y_s)} \{ L_{ce, F_d, C_{d1}}(x,y) + L_{ce, F_d, C_{d2}}(x,y) + \ldots \ldots + L_{ce, F_d, C_{dz}}(x,y) \} \\ L_{ce, F_d, C_{di}} = -\sum_{k=1}^{K} 1_{[k=y]} \log C(F(x)), i = 1, 2, \ldots \ldots, z \end{cases}$$

.

In the first loss function, $s_1$ is a fifth loss function value, $F_d$ is a feature extractor in the convolutional layer, $c_{di}$ is an i-th classifier in the fully connected layer, $(x_s, y_s)$ is a first sample set, $(x,y)$ is a first training sample, x is first training data in the first training sample, y is a label in the first training sample, $L_{ce, F_d, C_{di}}$ is a cross-entropy loss function of the feature extractor

$F_d$ and the i-th classifier $c_{di}$, K represents a total number of classes, y represents a label, k is a sixth output result corresponding to the first training sample, when k=y, the value of $I_{[k=y]}$ is 1, C (F (x)) is a classifier function, and z is the number of classifiers included in the fully connected layer.

Optionally, the first loss function may be, for example, a cross-entropy loss function.

At 13: when the fifth loss function value is not a minimum value of the first loss function, values of the parameters of the convolutional layer and values of the parameters of the fully connected layer in the to-be-trained neural network are adjusted based on the fifth loss function value, and return to operation 11.

Adjusting the values of the parameters of the convolutional layer includes adjusting the values of the parameters of the feature extractor in the to-be-trained neural network. Adjusting the values of the parameters of the fully connected layer includes adjusting the values of the parameters of each classifier in the to-be-trained neural network.

It should be noted that since the to-be-trained neural network is a network in the first neural network and the feature extractor in the to-be-trained neural network may also be a feature extractor in other neural networks, when the parameters of the feature extractor in the to-be-trained neural network are adjusted, the parameters of the feature extractor in other neural networks are also adjusted. Similarly, the classifiers of the to-be-trained neural network may also be the classifiers in other neural networks, so when the parameters of the classifiers in the to-be-trained neural network are adjusted, the parameters of the classifiers in other neural networks are also adjusted.

At 14: when the fifth loss function value is the minimum value of the first loss function, the operation ends. For the convenience of explanation, the values of the parameters of the convolutional layer in the to-be-trained neural network are named as the first parameter values, and the values of the parameters of the fully connected layer in the to-be-trained neural network are named as the second parameter values.

At step 3022: after fixing the values of the parameters of the convolutional layer in the to-be-trained neural network to the first parameter values, the parameters of the fully connected layer included in the to-be-trained neural network are trained based on the first sample set and the second sample set, and the values of the trained parameters of the fully connected layer are changed from the second parameter values to third parameter values.

In step 3022, fixing the values of the parameters of the convolutional layer in the to-be-trained neural network to the first parameter values includes fixing the values of the parameters of the feature extractor in the to-be-trained neural network to the first parameter values. Based on the first sample set and the second sample set, the parameters of each classifier included in the to-be-trained neural network are trained, and the values of the trained parameters of each classifier are changed from the second parameter values to the third parameter values.

The third parameter value of each classifier may be the same or different.

In step 3022, the parameters of the fully connected layer included in the to-be-trained neural network is trained according to the following operations 21 to 26. The operations of 21 to 26 are as follows.

At 21: for each of the first training samples in the first sample set, the first training sample is input into the to-be-trained neural network, so that the to-be-trained neural network classifies a target included in the first training data in the first training sample to obtain a first output result corresponding to the first training sample.

For example, each first training sample in the first sample set is input into the to-be-trained neural network, so that the to-be-trained neural network classifies a target included in the first training data in each first training sample to obtain a first output result corresponding to each first training sample.

For any one of first training samples, the first output result corresponding to the first training sample is used to indicate the target included in the first training data in the first training sample.

After the first training sample is input into the to-be-trained neural network, the convolutional layer (feature extractor) in the to-be-trained neural network extracts a feature from the first training data in the first training sample, and inputs the feature to the fully connected layer (each classifier in the fully connected layer) in the to-be-trained neural network, the fully connected layer (each classifier) performs a classification process on a target included in the first training data in the first training sample based on the feature, and outputs a processing result, and the first output result corresponding to the first training sample includes an output result of each classifier.

At 22: for each of the second training samples in the second sample set, the second training sample is input into the to-be-trained neural network, so that the to-be-trained neural network processes a target included in the second training data in the second training sample to obtain a first output result corresponding to the second training sample.

For any one of second training samples, the first output result corresponding to the second training sample is used to indicate the target included in the second training data in the second training sample.

After the second training sample is input into the to-be-trained neural network, the convolutional layer (feature extractor) in the to-be-trained neural network extracts a feature from the second training data in the second training sample, and inputs the feature to the fully connected layer (the fully connected layer includes each classifier) in the to-be-trained neural network, the fully connected layer (each classifier) performs a classification process, based on the feature, on a target included in the second training data in the second training sample, and outputs a processing result, and the first output result corresponding to the second training sample includes an output result of each classifier.

At 23: based on the first output result corresponding to each of the first training samples and the label included in each of the first training samples, a first loss function value is acquired according to the first loss function.

In operation 23, still use $s_1$ to represent the first loss function value.

At 24: based on the first output result corresponding to each of the second training samples, a second loss function value is obtained by the following distance loss function, and the first loss function is different from the distance loss function.

The distance loss function is:

$$\begin{cases} s_2 = \sum_{x \in \{x_t\}} L_{1,F_d,C_{d1},C_{d2},\dots,C_{dz}}(x) \\ L_{1,F_d,C_{d1},C_{d2},\dots,C_{dz}}(x) = \left| C_{d1}(F_d(x)) - C_{d2}(F_d(x)) \right| + \left| C_{d1}(F_d(x)) - C_{d3}(F_d(x)) \right| + \dots + \\ \left| C_{d1}(F_d(x)) - C_{dz}(F_d(x)) \right| + \dots + \left| C_{d2}(F_d(x)) - C_{d3}(F_d(x)) \right| + \dots + \left| C_{d2}(F_d(x)) - C_{dz}(F_d(x)) \right| \\ + \dots + \left| C_{dz-1}(F_d(x)) - C_{dz}(F_d(x)) \right| \end{cases}$$

.

In the distance loss function, $s_2$ is a second loss function value, $\{x_t\}$ is a second sample set and $(x)$ is a second training sample.

At 25: when a loss function value of the fully connected layer is not minimum, the values of parameters of the fully connected layer (the plurality of classifiers included in the fully connected layer) are adjusted based on the loss function value of the fully connected layer, and return to operation 21, where the loss function value of the fully connected layer includes the first loss function value and the second loss function value.

For example, the loss function value of the fully connected layer can be equal to $s_1 - s_2$, where,

$$s_1 - s_2 = \min_{F_d,C_{d1},C_{d2},\dots,C_{dm}} \sum_{(x,y) \in (x_s,y_s)} \{ L_{ce,F_d,C_{d1}}(x,y) + L_{ce,F_d,C_{d2}}(x,y) + \dots + L_{ce,F_d,C_{dz}}(x,y) \} - \sum_{x \in \{x_t\}} L_{1,F_d,C_{d1},C_{d2},\dots,C_{dz}}(x)$$

.

At 26: when the loss function value of the fully connected layer is minimum, the operation ends. For the convenience of explanation, the values of the parameters of the convolutional layer (feature extractor) of the to-be-trained neural network are named as the first parameter values, and the values of the parameters of the fully connected layer (multiple classifiers in the fully connected layer) of the to-be-trained neural network are named as the third parameter values.

At step 3023: after fixing the values of the parameters of the fully connected layer (multiple classifiers in the fully connected layer) in the to-be-trained neural network to the third parameter values, an intelligent model corresponding to the to-be-trained neural network is obtained by training the parameters of the convolutional layer (feature extractor) of the to-be-trained neural network based on the first sample set and the second sample set.

In step 3023, the parameters of the convolutional layer (feature extractor) included in the to-be-trained neural network is trained according to the following operations 31 to 36. The operations of 31 to 36 are as follows.

At 31: for each of the first training samples in the first sample set, the first training sample is input into the to-be-trained neural network, so that the to-be-trained neural network processes a target included in the first training data in the first training sample to obtain a second output result corresponding to the first training sample.

For any one of first training samples, the second output result corresponding to the first training sample is used to indicate the target included in the first training data in the first training sample.

After the first training sample is input into the to-be-trained neural network, the convolutional layer (feature extractor) in the to-be-trained neural network extracts a feature from the first training data in the first training sample, and inputs the feature to the fully connected layer (each classifier in the fully connected layer) in the to-be-trained neural network, the fully connected layer (each classifier in the fully connected layer) identifies a target included in the first training data in the first training sample based on the feature, and outputs a processing result, and the second output result corresponding to the first training sample includes an output result of the fully connected layer (each classifier in the fully connected layer).

At 32: for each of the second training samples in the second sample set, the second training sample is input into the to-be-trained neural network, so that the to-be-trained neural network processes a target included in the second training data in the second training sample to obtain a second output result corresponding to the second training sample.

For any one of second training samples, the second output result corresponding to the second training sample is used to indicate the target included in the second training data in the second training sample.

After the second training sample is input into the to-be-trained neural network, the convolutional layer (feature extractor) in the to-be-trained neural network extracts a feature from the second training data in the second training sample, and inputs the feature to the fully connected layer (each classifier in the fully connected layer) in the to-be-trained neural network, the fully connected layer (each classifier in the fully connected layer) identifies a target included in the second training data in the second training sample based on the feature, and outputs a processing result, and the second output result corresponding to the second training sample includes an output result of each classifier.

At 33: based on the second output result corresponding to each of the first training samples and the label included in each of the first training samples, a third loss function value is acquired according to the first loss function.

In operation 33, still use $s_1$ to represent the third loss function value.

At 34: based on the second output result corresponding to each of the second training samples, a fourth loss function value is obtained through the distance loss function.

In operation 34, still use $s_2$ to represent the fourth loss function value.

At 35: when a loss function value of the convolutional layer is not minimum, the values of parameters of the convolutional layer (feature extractor) of the to-be-trained neural network are adjusted based on the loss function value of the convolutional layer, and return to operation 31, where the loss function value of the convolutional layer includes the third loss function value and the fourth loss function value.

For example, the loss function value of the convolutional layer can be equal to $s_1 + s_2$, where,

$$s_1 + s_2 = \min_{F_d, C_{d1}, C_{d2}, ..., C_{dm}} \sum_{(x,y) \in (x_s, y_s)} \{L_{ce, F_d, C_{d1}}(x, y) + L_{ce, F_d, C_{d2}}(x, y) + ...... + L_{ce, F_d, C_{dz}}(x, y)\} + \sum_{x \in \{x_t\}} L_{1, F_d, C_{d1}, C_{d2}, ..., C_{dz}}(x)$$ .

At 36: when the loss function value of the convolutional layer is minimum, the operation ends and the to-be-trained neural network at this time is taken as the intelligent model.

For each neural network in the first network set (the first neural network and m-1 second neural networks), the flow of the above steps 3021-3023 is executed for each neural network to obtain m intelligent models. The m intelligent models include a first intelligent model obtained by training the first neural network and m-1 second intelligent models obtained by training the m-1 second neural networks respectively.

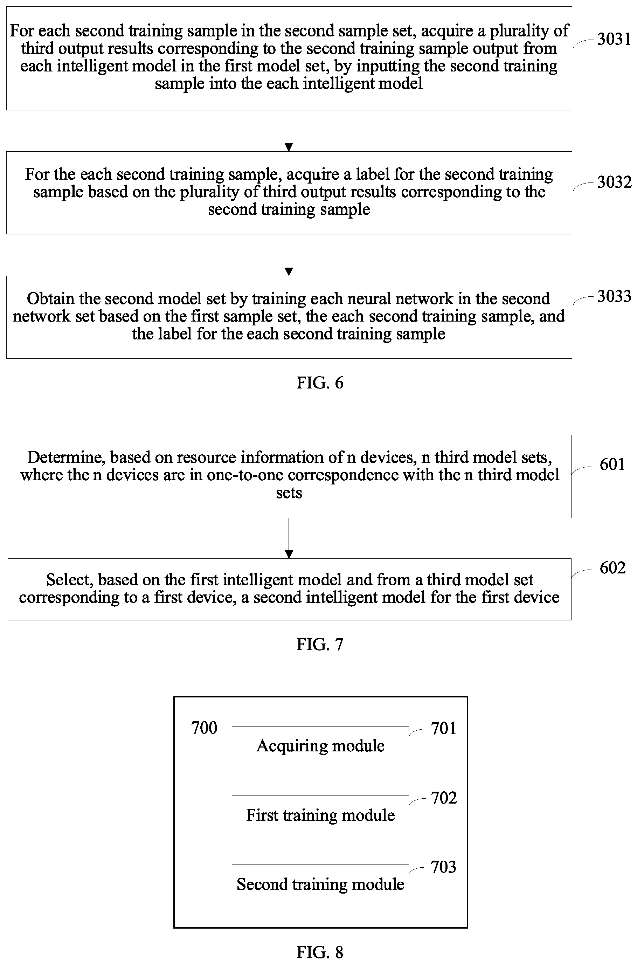

For the above step 303, refer to FIG. 6. In step 303, step 303 is realized by the following operations from 3031 to 3033. The operations of 3031 to 3033 are as follows.

At step 3031: for each second training sample in the second sample set, a plurality of third output results corresponding to the second training sample output from each intelligent model in the first model set are acquired by inputting the second training sample in to the each intelligent model.

The first model set includes m intelligent models, and for each second training sample in the second sample set, the second training sample is respectively input into each of the m intelligent models. Each intelligent model processes the target in the second training data included in the second training sample and outputs a processing result. The processing results output by the m intelligent models are obtained, there are m processing results in total, and the m processing results are used as m third output results corresponding to the second training sample. For each second training sample in the second sample set, the above operations are performed to obtain m third output results corresponding to each second training sample in the second sample set.

At step 3032: for the each second training sample, a label for the second training sample is acquired based on the plurality of third output results corresponding to the second training sample.

For any one of second training samples, the second training sample corresponds to m third output results, and an average value of the m third output results is calculated, or a maximum value or minimum value is selected from the m third output results. Taking the average value, the maximum value or the minimum value as the label corresponding to the second training sample. For each second training sample of the second sample set, the label corresponding to each second training sample is acquired according to the above operation.

At step 3033, the second model set is obtained by training each neural network in the second network set based on the first sample set, the each second training sample, and the label for the each second training sample.

For any one of second neural networks in the second network set, the second neural network can be trained according to the following operations 41-44. The operations of 41 to 44 are as follows.

At 41: for each training sample, the training sample is input into the second neural network, so that the second neural network process a target included in training data in the training sample to obtain a seventh output result corresponding to the training sample, and the each training sample includes each first training sample in the first sample set and each second training sample in the second sample set.

For each training sample, the seventh output result corresponding to the training sample is used to indicate the target included in the training data in the training sample.

After the training sample is input to the second neural network, the convolutional layer (feature extractor) in the second neural network extracts a feature from the training data in the second training sample, inputs the feature to the fully connected layer (each classifier in the fully connected layer) in the second neural network, and the fully connected layer (each classifier in the fully connected layer) processes a target included in the training data in the training sample based on the feature, outputs a processing result, and the seventh output corresponding to the training sample includes an output result of the fully-connected layer.

At 42: for the each training sample, based on the seventh output result corresponding to the training sample and the label for the training sample, a loss function value is acquired according to the first loss function.

At 43: when the loss function value is not a minimum value of the first loss function, values of the parameters of the second neural network are adjusted based on the loss function value, and return to operation 41.

At 44: when the loss function value is the minimum value of the first loss function, the operation ends and the second neural network at this time is taken as a second intelligent model.

For each second neural network in the second network set, training can be carried out according to the above operations of 41-44 to obtain the second intelligent model corresponding to each second neural network, and a total of m second intelligent models can be obtained.

The first intelligent model corresponding to the first neural network and the second intelligent model corresponding to each sub-network in the first neural network are trained through the flow of the above steps 301-303, the scale of each second intelligent model is different, and the second intelligent models with different scales are suitable for devices with different hardware performance. Assuming that there are n devices with different hardware performance, n is an integer greater than 1, and the number of second intelligent models is large, one second intelligent model can be selected for each device from many second intelligent models. Referring to FIG. 7, an embodiment of the present application provides the following method of selecting an intelligent model, including the following steps.

At step 601: based on resource information of n devices, n third model sets are determined, and the n devices are in one-to-one correspondence with the n third model sets.

The n devices include a first device, a third model set corresponding to the first device includes one or more second intelligent models, and resources of the first device cover resources required by each of the one or more second intelligent models.

Optionally, the resource information of the first device includes a size of idle memory and/or the number of CPU processing cores, etc. The resource information of the first device is used to indicate the resources on the device.

In step 601, based on the resource information of the first device and the scale of each trained second intelligent model, at least one second intelligent model that can run on the first device is determined (i.e. the resources of the first device need to meet the resources required by each determined second intelligent model), and a model set including the at least one second intelligent model is determined as the third model set corresponding to the first device. According to the same method, the above operations are respectively performed on other n-1 devices to obtain a third model set corresponding to each of the n-1 devices.

At step 602, a second intelligent model is selected for the first device from the third model set corresponding to the first device based on the first intelligent model.

In step 602, a fourth output result corresponding to each of the second training samples in the second sample set output by the first intelligent model is acquired by inputting each of the second training samples into the first intelligent model. A fifth output result corresponding to each of the second training samples in the second sample set output by a target intelligent model is acquired by inputting each of the second training samples into the target intelligent model, where the target intelligent model is one of the one or more second intelligent models in the third model set corresponding to the first device. Difference information between the first intelligent model and the target intelligent model is acquired based on the fourth output result and the fifth output result corresponding to each of the second training samples. In the same manner as described above, difference information between the first intelligent model and each second intelligent model in the third model set corresponding to the first device is acquired. A second intelligent model is selected from the at least one second intelligent model based on the difference information between the first intelligent model and each of the second intelligent models.

For each of the second training samples, a difference between the fourth output result and the fifth output result of the second training sample is calculated, that is, a difference corresponding to the second training sample is calculated. An average difference is calculated based on the difference corresponding to each of the second training samples, and the average difference is used as the difference information between the first intelligent model and the target intelligent model.

Referring to FIG. 8, an embodiment of the present application provides an apparatus 700 for training an intelligent model, and the apparatus 700 includes:

an acquiring module 701, configured to acquire a first network set and a second network set from a first neural network, where the first network set includes the first neural network and m-1 second neural networks, m is an integer greater than 1, the second network set includes m second neural networks, the m-1 second neural networks and the m second neural networks are different sub-networks in the first neural network, and a network size of each neural network in the first network set is larger than a network size of each neural network in the second network set;

a first training module 702, configured to obtain a first model set by training each neural network in the first network set based on a first sample set and a second sample set, where the first sample set includes a plurality of first training samples, each of the first training samples includes first training data and a label to indicate a target in the first training data, the second sample set includes a plurality of second training samples, each of the second training samples includes second training data, and the first model set includes a first intelligent model obtained by training the first neural network and m-1 second intelligent models obtained by training the m-1 second neural networks; and

a second training module 703, configured to obtain a second model set by training each neural network in the second network set based on the first sample set, the second sample set and the first model set, where the second model set includes m second intelligent models obtained by training the m second neural networks.

Optionally, the first training module 702 is configured to: for any one to-be-trained neural network in the first network set, train, based on the first sample set, parameters of a convolutional layer and parameters of a fully connected layer included in the to-be-trained neural network, where values of the trained parameters of the convolutional layer are first parameter values and values of the trained parameters of the fully connected layer are second parameter values; train, with fixing the values of the parameters of the convolutional layer to the first parameter values, the parameters of the fully connected layer included in the to-be-trained neural network based on the first sample set and the second sample set, so as change the values of the trained parameters of the fully connected layer from the second parameter values to third parameter values; and train, with fixing the values of the parameters of the fully connected layer to the third parameter values, the parameters of the convolutional layer in the to-be-trained neural network based on the first sample set and the second sample set, so to obtain an intelligent model corresponding to the to-be-trained neural network.

Optionally, the first training module 702 is configured to: for each of the first training samples in the first sample set, acquire a first output result corresponding to the first training sample output from the to-be-trained neural network by inputting the first training sample into the to-be-trained neural network, and for each of the second training samples in the second sample set, acquire a first output result corresponding to the second training sample by inputting the second training sample into the to-be-trained neural network; acquire a first loss function value through a first loss function based on the first output result corresponding to each of the first training samples and the label included in each of the first training samples, and acquire a second loss function value through a distance loss function based on the first output result corresponding to each of the second training samples, where the first loss function includes a loss function other than the distance loss function; and when a loss function value of the fully connected layer is not minimum, adjust the values of parameters of the fully connected layer based on the loss function value of the fully connected layer, where the loss function value of the fully connected layer includes the first loss function value and the second loss function value.

Optionally, the first training module 702 is configured to: for each of the first training samples in the first sample set, acquire a second output result corresponding to the first training sample output from the to-be-trained neural network by inputting the first training sample into the to-be-trained neural network, and for each of the second training samples in the second sample set, acquire a second output result corresponding to the second training sample by inputting the second training sample into the to-be-trained neural network; acquire a third loss function value through the first loss function based on the second output result corresponding to each of the first training samples and the label included in each of the first training samples, and acquire a fourth loss function value through the distance loss function based on the second output result corresponding to each of the second training samples; and when a loss function value of the convolutional layer is not minimum, adjust the values of parameters of the convolutional layer based on the loss function value of the convolutional layer, where the loss function value of the convolutional layer includes the third loss function value and the fourth loss function value.

The second training module 703 is configured to: for each of the intelligent models in the first model set, acquire a plurality of third output results corresponding to the second training samples in the second sample set output by the intelligent model by inputting each of the second training samples into the intelligent model; for each of the second training samples, acquire a label for the second training sample based on the plurality of third output results corresponding to the second training sample; and obtain the second model set by training each neural network in the second network set based on the first sample set, each of the second training samples, and the label for each of the second training samples.

The apparatus 700 further includes: a determining module, configured to or each of the n first devices, determine a third model set corresponding to the first device based on the resource information of the first device, where the third model set corresponding to the first device includes one or more second intelligent models, and the resources of the first devices cover resources required by each of the one or more second intelligent models, and n is an integer greater than 1; a selecting module, configured to select a second intelligent model for the first device from the third model set corresponding to the first device based on the first intelligent model.

The selecting module is configured to: acquire, based on the second sample set, difference information between the first intelligent model and each of the one or more second intelligent models in the third model set corresponding to the first device; and select a second intelligent model from the one or more second intelligent models based on the difference information between the first intelligent model and each of the one or more second intelligent models.

The selecting module is configured to: acquire a fourth output result corresponding to each of the second training samples in the second sample set output by the first intelligent model by inputting each of the second training samples into the first intelligent model; acquire a fifth output result corresponding to each of the second training samples in the second sample set output by a target intelligent model by inputting each of the second training samples into the target intelligent model, where the target intelligent model is one of the one or more second intelligent models in the third model set corresponding to the first device; and acquire difference information between the first intelligent model and the target intelligent model based on the fourth output result and the fifth output result corresponding to each of the second training samples.

In an embodiment of the present application, since the scales of the neural networks in the first network set are all larger than those in the second network set, each neural network in the first network set can be trained by using the first sample set and the second sample set to obtain the intelligent model corresponding to each neural network in the first network set, and the first model set can be obtained. Then, each neural network in the second network set with smaller network scale can be trained by using the first model set, the first sample set and the second sample set, so that the intelligent model corresponding to each neural network in the second network set can be trained, so that both labeled training samples and unlabeled training samples can be included, and the intelligent model with superior performance can also be trained.

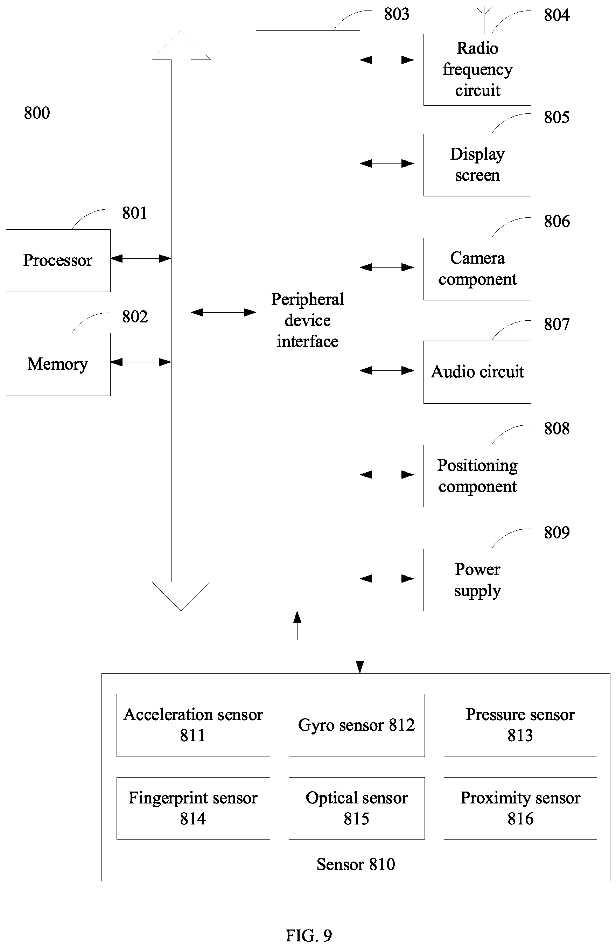

FIG. 9 shows a structural block diagram of an electronic device 800 provided by an exemplary embodiment of the present application. The electronic device 800 can be a portable mobile terminal, such as a smart phone, a tablet computer, an MP3 (moving picture experts group audio layer III) player, an MP4 player (moving picture experts group audio layer IV), a laptop or a desktop computer. The electronic device 800 may also be named as user equipment, portable terminal, laptop terminal, desktop terminal and other names.

Typically, the electronic device 800 includes: a processor 801 and a memory 802.

The processor 801 may include one or more processing cores, such as a 4-core processor, an 8-core processor, and the like. The processor 801 can be implemented in at least one hardware form of digital signal processing (DSP), field-programmable gate array (FPGA) or programmable logic array (PLA). The processor 801 may also include a main processor and a co-processor. The main processor is a processor for processing the data in an awake state, also named as central processing unit (CPU). The co-processor is a low-power processor for processing data in a standby state. In some embodiments, the processor 801 may be integrated with a graphics processing unit (GPU), and the GPU is responsible for rendering and drawing the content to be displayed on a display screen. In some embodiments, the processor 801 may further include an artificial intelligence (AI) processor, which is used for processing computing operations related to machine learning.

The memory 802 may include one or more computer-readable storage media, which may be non-transitory. The memory 802 may also include high-speed random access memory, and non-volatile memory, such as one or more magnetic disk storage devices and flash memory storage devices. In some embodiments, the non-transitory computer-readable storage medium in the memory 802 is configured to store at least one instruction, the at least one instruction being used to be executed by the processor 801 to implement the method of training an intelligent model provided by the method embodiments in the present application.

In some embodiments, the electronic device 800 further optionally includes a peripheral device interface 803 and at least one peripheral device. The processor 801, the memory 802, and the peripheral device interface 803 may be connected to each other through a bus or signal line. Each peripheral device can be connected to the peripheral device interface 803 through a bus, a signal line or a circuit board. Specifically, the peripheral device includes at least one of a radio frequency circuit 804, a display screen 805, a camera component 806, an audio circuit 807, a positioning component 808 and a power supply 809.

The peripheral device interface 803 can be configured to connect at least one peripheral device related to input/output (I/O) to the processor 801 and the memory 802. In some embodiments, the processor 801, the memory 802 and the peripheral device interface 803 are integrated on a same circuit board; In some other embodiments, any one or two of the processor 801, the memory 802 and the peripheral device interface 803 can be implemented on separate circuit boards, which is not limited in this embodiment.

The radio frequency circuit 804 is configured to receive and transmit radio frequency (RF) signals, also named as electromagnetic signals. The RF circuit 804 communicates with a communication network and other communication devices through electromagnetic signals. The RF circuit 804 converts an electrical signal into an electromagnetic signal for transmission, or, converts a received electromagnetic signal into an electrical signal. Optionally, the RF circuit 804 includes an antenna system, an RF transceiver, one or more amplifiers, a tuner, an oscillator, a digital signal processor, a codec, a subscriber identity module card, and the like. The RF circuit 804 can communicate with other terminals through at least one wireless communication protocol. The wireless communication protocol includes but is not limited to: World Wide Web, metropolitan area network, intranet, mobile communication networks of all generations (2G, 3G, 4G and 5G), wireless local area network and/or wireless fidelity (WiFi) network. In some embodiments, the RF circuit 804 may further include a circuit related to near field communication (NFC), which is not limited in the present application.

The display screen 805 is configured to display a user interface (UI). The UI may include graphics, text, icons, videos and any combination thereof. When the display screen 805 is a touch display screen, the display screen 805 further has the ability to collect touch signals on or above a surface of the display screen 805. The touch signal can be input to the processor 801 as a control signal for processing. At this time, the display screen 805 can further be configured to provide virtual buttons and/or virtual keyboards, also named as soft buttons and/or soft keyboards. In some embodiments, the display screen 805 can be one, which is arranged on a front panel of the electronic device 800. In other embodiments, there may be at least two display screens 805, which are respectively arranged on different surfaces of the electronic device 800 or in a folded design. In other embodiments, the display screen 805 may be a flexible display screen disposed on a curved surface or a folded surface of the electronic device 800. Even, the display screen 805 can further be set as a non-rectangular irregular pattern, that is, a special-shaped screen. The display screen 805 can be made of materials such as liquid crystal display (LCD) and organic light-emitting diode (OLED).

The camera component 806 is configured to capture images or videos. Optionally, the camera component 806 includes a front camera and a rear camera. Typically, the front camera is provided on a front panel of the terminal and the rear camera is provided on a back of the terminal. In some embodiments, there are at least two rear cameras, which are any one of a main camera, a depth-of-field camera, a wide-angle camera and a telephoto camera, so as to realize a fusion of the main camera and the depth-of-field camera to realize a background blur function, a fusion of the main camera and the wide-angle camera to realize a panoramic shooting, virtual reality (VR) shooting function or other fusion shooting functions. In some embodiments, the camera component 806 may further include a flash. The flash can be a single color temperature flash or a dual color temperature flash. The dual color temperature flash refers to a combination of warm light flash and cold light flash, which can be used for light compensation under different color temperatures.

The audio circuit 807 may include a microphone and a speaker. The microphone is configured to collect sound waves from users and the environment, and convert the sound waves into electrical signals and input them to the processor 801 for processing, or to the RF circuit 804 for voice communication. For the purpose of stereo acquisition or noise reduction, there may be a plurality of microphones, which are respectively arranged at different parts of the electronic device 800. The microphone can further be an array microphone or an omnidirectional acquisition microphone. The speaker is configured to convert the electrical signal from the processor 801 or the RF circuit 804 into sound waves. The speaker can be a traditional thin film speaker or a piezoelectric ceramic speaker. When the speaker is a piezoelectric ceramic speaker, it can not only convert electrical signals into audible sound waves, but also convert electrical signals into inaudible sound waves for ranging and other purposes. In some embodiments, the audio circuit 807 may further include an earphone jack.

The positioning component 808 is used for positioning a current geographical position of the electronic device 800 to realize navigation or location based service (LBS). The positioning component 808 can be a positioning component based on global positioning system (GPS) in the United States, Beidou system in China or Galileo system in Russia.

The power supply 809 is configured to supply power to various components in the electronic device 800. The power supply 809 may be alternating current, direct current, disposable battery or rechargeable battery. When the power supply 809 includes a rechargeable battery, the rechargeable battery may be a wired rechargeable battery or a wireless rechargeable battery. The wired rechargeable battery is a battery charged by a wired line, and the wireless rechargeable battery is a battery charged by a wireless coil. The rechargeable battery can further be configured to support fast charging technology.

In some embodiments, the electronic device 800 further includes one or more sensors 810. The one or more sensors 810 include, but are not limited to, an acceleration sensor 811, a gyro sensor 812, a pressure sensor 813, a fingerprint sensor 814, an optical sensor 815 and a proximity sensor 816.

The acceleration sensor 811 can detect a magnitude of acceleration on three coordinate axes of a coordinate system established by the electronic device 800. For example, the acceleration sensor 811 can be used to detect components of gravity acceleration on three coordinate axes. The processor 801 can control the display screen 805 to display the user interface in a landscape view or a portrait view according to a gravity acceleration signal collected by the acceleration sensor 811. The acceleration sensor 811 may further be used for collecting motion data in games or for users.

The gyro sensor 812 can detect a body direction and rotation angle of the electronic device 800, and the gyro sensor 812 can cooperate with the acceleration sensor 811 to collect 3D actions of the user on the electronic device 800. Based on the data collected by the gyro sensor 812, the processor 801 can realize the following functions: motion sensing (such as changing the UI according to a user's tilt operation), image stabilization during shooting, game control and inertial navigation.

The pressure sensor 813 may be disposed on a side frame of the electronic device 800 and/or a lower layer of the display screen 805. When the pressure sensor 813 is arranged on the side frame of the electronic device 800, it can detect the user's grip signal on the electronic device 800, and the processor 801 can recognize left and right hands or perform quick operation according to the grip signal collected by the pressure sensor 813. When the pressure sensor 813 is arranged at the lower layer of the display screen 805, the processor 801 controls operability controls on the UI interface according to the user's pressure operation on the display screen 805. The operability control includes at least one of a

EP 4 432 155 B1

button control, a scroll bar control, an icon control or a menu control.

The fingerprint sensor 814 is configured to collect the user's fingerprint, and the processor 801 can identify the user's identity according to a fingerprint collected by the fingerprint sensor 814, or the fingerprint sensor 814 can identify the user's identity according to the collected fingerprint. When the user's identity is recognized as a trusted identity, the processor 801 authorizes the user to perform relevant sensitive operations, including unlocking the screen, viewing encrypted information, downloading software, paying and changing settings. The fingerprint sensor 814 may be disposed on the front, back or side of the electronic device 800. When the electronic device 800 is provided with a physical key or a manufacturer Logo, the fingerprint sensor 814 may be integrated with the physical key or the manufacturer Logo.

The optical sensor 815 is configured to collect ambient light intensity. In an embodiment, the processor 801 can control display brightness of the display screen 805 according to the ambient light intensity collected by the optical sensor 815. Specifically, when the ambient light intensity is high, the display brightness of the display screen 805 is increased. When the ambient light intensity is low, the display brightness of the display screen 805 is lowered. In another embodiment, the processor 801 can further dynamically adjust shooting parameters of the camera component 806 according to the ambient light intensity collected by the optical sensor 815.

The proximity sensor 816, also known as a distance sensor, is typically provided on the front panel of the electronic device 800. The proximity sensor 816 is configured to collect a distance between the user and the front of the electronic device 800. In an embodiment, when the proximity sensor 816 detects that the distance between the user and the front of the electronic device 800 is gradually decreasing, the processor 801 controls the display screen 805 to switch from a screen-on state to a screen-off state. When the proximity sensor 816 detects that the distance between the user and the front of the electronic device 800 is gradually increasing, the processor 801 controls the display screen 805 to switch from the screen-off state to the screen-on state.

It can be understood by those skilled in the art that the structure shown in FIG. 9 does not constitute a limitation to the electronic device 800, and may include more or less components than shown, or combine some components, or adopt different component arrangements.

An embodiment of the present application further provides a machine-readable storage medium, and machine-executable instructions are stored in the machine-readable storage medium, and the machine-executable instructions, when executed by a processor, realize the method of training an intelligent model described above. For example, the machine-readable storage medium can be ROM, RAM, CD-ROM, magnetic tape, floppy disk, optical data storage device, etc.

Those skilled in the art will readily conceive other embodiments of the present application upon consideration of the specification and practice of the various embodiments disclosed herein. The specification and examples are considered as exemplary only, with the scope of the present invention being defined by the following claims.

It should be understood that this application is not limited to the precise structure that has been described above and shown in the drawings, and various modifications and changes can be made without departing from the scope which is limited by the appended claim.

## Claims

1. A computer-implemented method of training an intelligent model, comprising:

    acquiring (301) a first network set and a second network set from a first neural network, wherein the first network set comprises the first neural network and m-1 second neural networks in the first network set, m is an integer greater than 1, the second network set comprises m second neural networks in the second network set, the m-1 second neural networks in the first network set and the m second neural networks in the second network set are different sub-networks in the first neural network, and a network size of each neural network in the first network set is larger than a network size of each neural network in the second network set;
    obtaining (302) a first model set by training each neural network in the first network set based on a first sample set and a second sample set, wherein the first sample set comprises a plurality of first training samples, each of the first training samples comprises first training data and a label to indicate a target in the first training data, the second sample set comprises a plurality of second training samples, each of the second training samples comprises unlabeled second training data, and the first model set comprises a first intelligent model obtained by training the first neural network and m-1 second intelligent models obtained by training the m-1 second neural networks in the first network set; and
    obtaining (303) a second model set by training each neural network in the second network set based on the first sample set, the second sample set and the first model set, wherein the second model set comprises m second intelligent models obtained by training the m second neural networks in the second network set, comprising:

for each of the intelligent models in the first model set, acquiring (3031) a plurality of third output results corresponding to each of the second training samples in the second sample set output by the intelligent model by inputting each of the second training samples into the intelligent model;

for each of the second training samples, acquiring (3032) a label for the second training sample based on the plurality of third output results corresponding to the second training sample; and

obtaining (3033) the second model set by training each neural network in the second network set based on the first sample set, each of the second training samples, and the label for each of the second training samples;

the method further comprising: for each of n first devices,

determining a third model set corresponding to said each first device based on resource information of the first device, wherein the third model set corresponding to the first device comprises one or more of the second intelligent models from the second model set, and resources of the first device cover resources required by each of the one or more second intelligent models, and n is an integer greater than 1; and

selecting (602) a second intelligent model for the first device from the third model set corresponding to the first device based on the first intelligent model, comprising:

acquiring, based on the second sample set, difference information between the first intelligent model and each of the one or more second intelligent models in the third model set corresponding to the first device, comprising:

acquiring a fourth output result corresponding to each of the second training samples in the second sample set output by the first intelligent model by inputting each of the second training samples into the first intelligent model;

acquiring a fifth output result corresponding to each of the second training samples in the second sample set output by a target intelligent model by inputting each of the second training samples into the target intelligent model, wherein the target intelligent model is one of the one or more second intelligent models in the third model set corresponding to the first device; and

acquiring difference information between the first intelligent model and the target intelligent model based on the fourth output result and the fifth output result corresponding to each of the second training samples; and

selecting a second intelligent model from the one or more second intelligent models in the third model set based on the difference information between the first intelligent model and each of the one or more second intelligent models in the third model set.

2. The method according to claim 1, wherein obtaining (302) the first model set by training each neural network in the first network set based on the first sample set and the second sample set comprises:

for any one to-be-trained neural network in the first network set, training (3021), based on the first sample set, parameters of a convolutional layer and parameters of a fully connected layer comprised in the to-be-trained neural network, wherein values of the trained parameters of the convolutional layer are first parameter values and values of the trained parameters of the fully connected layer are second parameter values;

training (3022), with fixing the values of the parameters of the convolutional layer to the first parameter values, the parameters of the fully connected layer comprised in the to-be-trained neural network based on the first sample set and the second sample set, so to change the values of the trained parameters of the fully connected layer from the second parameter values to third parameter values; and

training (3023), with fixing the values of the parameters of the fully connected layer to the third parameter values, the parameters of the convolutional layer in the to-be-trained neural network based on the first sample set and the second sample set, so to obtain an intelligent model corresponding to the to-be-trained neural network.

3. The method according to claim 2, wherein training (3022) the parameters of the fully connected layer comprised in the to-be-trained neural network based on the first sample set and the second sample set comprises:

for each of the first training samples in the first sample set, acquiring a first output result corresponding to the first training sample output from the to-be-trained neural network by inputting the first training sample into the to-be-trained neural network, and for each of the second training samples in the second sample set, acquiring a first output result corresponding to the second training sample by inputting the second training sample into the to-be-trained neural network;

acquiring a first loss function value through a first loss function based on the first output result corresponding to each of the first training samples and the label comprised in each of the first training samples, and acquiring a second loss function value through a distance loss function based on the first output result corresponding to each of the second training samples, wherein the first loss function comprises a loss function other than the distance loss function; and

when a loss function value of the fully connected layer is not minimum, adjusting the values of parameters of the fully connected layer based on the loss function value of the fully connected layer, wherein the loss function value of the fully connected layer comprises the first loss function value and the second loss function value.

4. The method according to claim 3, wherein training (3023) the parameters of the convolutional layer in the to-be-trained neural network based on the first sample set and the second sample set comprises:

for each of the first training samples in the first sample set, acquiring a second output result corresponding to the first training sample output from the to-be-trained neural network by inputting the first training sample into the to-be-trained neural network, and for each of the second training samples in the second sample set, acquiring a second output result corresponding to the second training sample by inputting the second training sample into the to-be-trained neural network;

acquiring a third loss function value through the first loss function based on the second output result corresponding to each of the first training samples and the label comprised in each of the first training samples, and acquiring a fourth loss function value through the distance loss function based on the second output result corresponding to each of the second training samples; and

when a loss function value of the convolutional layer is not minimum, adjusting the values of parameters of the convolutional layer based on the loss function value of the convolutional layer, wherein the loss function value of the convolutional layer comprises the third loss function value and the fourth loss function value.

5. The method according to any one of claims 1 to 4, wherein the method is applied to a system with an architecture of central computing-edge devices,

the system comprises a central device and a plurality of edge intelligent devices, the edge intelligent devices are deployed in different areas, and computing power and storage capacity of the central device both are greater than computing power and storage capacity of each of the edge intelligent devices,

the method is performed by the central device, and the second training samples in the second sample set comprise data collected by each of the edge intelligent devices and received by the central device.

6. An apparatus (700) for training an intelligent model, comprising:

an acquiring module (701), configured to acquire a first network set and a second network set from a first neural network, wherein the first network set comprises the first neural network and m-1 second neural networks in the first network set, m is an integer greater than 1, the second network set comprises m second neural networks in the second network set, the m-1 second neural networks in the first network set and the m second neural networks in the second network set are different sub-networks in the first neural network, and a network size of each neural network in the first network set is larger than a network size of each neural network in the second network set;

a first training module (702), configured to obtain a first model set by training each neural network in the first network set based on a first sample set and a second sample set, wherein the first sample set comprises a plurality of first training samples, each of the first training samples comprises first training data and a label to indicate a target in the first training data, the second sample set comprises a plurality of second training samples, each of the second training samples comprises unlabeled second training data, and the first model set comprises a first intelligent model obtained by training the first neural network and m-1 second intelligent models obtained by training the m-1 second neural networks in the first network set; and

a second training module (703), configured to obtain a second model set by training each neural network in the second network set based on the first sample set, the second sample set and the first model set, wherein the second model set comprises m second intelligent models obtained by training the m second neural networks in the second network set, comprising:

for each of the intelligent models in the first model set, acquiring a plurality of third output results corresponding to each of the second training samples in the second sample set output by the intelligent model by inputting each of the second training samples into the intelligent model;

for each of the second training samples, acquiring a label for the second training sample based on the plurality of third output results corresponding to the second training sample; and

obtaining the second model set by training each neural network in the second network set based on the first sample set, each of the second training samples, and the label for each of the second training samples;

wherein the apparatus further comprises a determining module and a selecting module, the determining module is configured to determine a third model set corresponding to said each first device based on resource information of the first device, wherein the third model set corresponding to the first device comprises one or more of the second intelligent models from the second model set, and resources of the first device cover resources required by each of the one or more second intelligent models, and n is an integer greater than 1; and
the selecting module is configured to select a second intelligent model for the first device from the third model set corresponding to the first device based on the first intelligent model, comprising:

acquiring, based on the second sample set, difference information between the first intelligent model and each of the one or more second intelligent models in the third model set corresponding to the first device, comprising:

acquiring a fourth output result corresponding to each of the second training samples in the second sample set output by the first intelligent model by inputting each of the second training samples into the first intelligent model;
acquiring a fifth output result corresponding to each of the second training samples in the second sample set output by a target intelligent model by inputting each of the second training samples into the target intelligent model, wherein the target intelligent model is one of the one or more second intelligent models in the third model set corresponding to the first device; and
acquiring difference information between the first intelligent model and the target intelligent model based on the fourth output result and the fifth output result corresponding to each of the second training samples; and

selecting a second intelligent model from the one or more second intelligent models in the third model set based on the difference information between the first intelligent model and each of the one or more second intelligent models in the third model set.

7. An electronic device (800), comprising a processor (801) and a memory (802);

the memory (802) is configured to store machine executable instructions; and
the processor (801) is configured to read and execute the machine executable instructions stored in the memory to carry out the method according to any one of claims 1 to 5.

8. A machine-readable storage medium, wherein machine-executable instructions are stored in the machine-readable storage medium, and the machine-executable instructions, when executed by a processor, realize the method according to any one of claims 1 to 5.

**Patentansprüche**

1. Computer-implementiertes Verfahren zum Trainieren eines intelligenten Modells, umfassend:

Erfassen (301) eines ersten Netzwerksatzes und eines zweiten Netzwerksatzes von einem ersten neuronalen Netzwerk, wobei der erste Netzwerksatz das erste neuronale Netzwerk und m-1 zweite neuronale Netzwerke in dem ersten Netzwerksatz umfasst, m eine ganze Zahl größer als 1 ist, der zweite Netzwerksatz m zweite neuronale Netzwerke in dem zweiten Netzwerksatz umfasst, die m-1 zweiten neuronalen Netzwerke in dem ersten Netzwerksatz und die m zweiten neuronalen Netzwerke in dem zweiten Netzwerksatz unterschiedliche Teilnetzwerke in dem ersten neuronalen Netzwerk sind und eine Netzwerkgröße jedes neuronalen Netzwerks in dem ersten Netzwerksatz größer als eine Netzwerkgröße jedes neuronalen Netzwerks in dem zweiten Netzwerksatz ist;
Erhalten (302) eines ersten Modellsatzes durch Trainieren jedes neuronalen Netzwerks in dem ersten Netzwerksatz basierend auf einem ersten Probensatz und einem zweiten Probensatz, wobei der erste Probensatz eine Vielzahl von ersten Trainingsproben umfasst, jede der ersten Trainingsproben erste Trainingsdaten und eine Markierung zum Angeben eines Ziels in den ersten Trainingsdaten umfasst, der zweite Probensatz eine Vielzahl von zweiten Trainingsproben umfasst, jede der zweiten Trainingsproben unmarkierte zweite Trainingsdaten umfasst und der erste Modellsatz ein erstes intelligentes Modell, das durch Trainieren des ersten

20

neuronalen Netzwerks erhalten wird, und m-1 zweite intelligente Modelle, die durch Trainieren der m-1 zweiten neuronalen Netzwerke in dem ersten Netzwerksatz erhalten werden, umfasst; und

Erhalten (303) eines zweiten Modellsatzes durch Trainieren jedes neuronalen Netzwerks in dem zweiten Netzwerksatz basierend auf dem ersten Probensatz, dem zweiten Probensatz und dem ersten Modellsatz, wobei der zweite Modellsatz m zweite intelligente Modelle umfasst, die durch Trainieren der m zweiten neuronalen Netzwerke in dem zweiten Netzwerksatz erhalten werden, umfassend:

für jedes der intelligenten Modelle in dem ersten Modellsatz, Erfassen (3031) einer Vielzahl von dritten Ausgabeergebnissen, die jeder der zweiten Trainingsproben in dem zweiten Probensatz entsprechen, die durch das intelligente Modell ausgegeben werden, durch Eingeben jeder der zweiten Trainingsproben in das intelligente Modell;

für jede der zweiten Trainingsproben, Erfassen (3032) einer Markierung für die zweite Trainingsprobe basierend auf der Vielzahl von dritten Ausgabeergebnissen, die der zweiten Trainingsprobe entsprechen; und

Erhalten (3033) des zweiten Modellsatzes durch Trainieren jedes neuronalen Netzwerks in dem zweiten Netzwerksatz basierend auf dem ersten Probensatz, jeder der zweiten Trainingsproben und der Markierung für jede der zweiten Trainingsproben;

wobei das Verfahren ferner umfasst: für jede von n ersten Vorrichtungen,

Bestimmen eines dritten Modellsatzes, der jeder ersten Vorrichtung entspricht,

basierend auf Ressourceninformationen der ersten Vorrichtung, wobei der dritte Modellsatz, der der ersten Vorrichtung entspricht, ein oder mehrere der zweiten intelligenten Modelle aus dem zweiten Modellsatz umfasst und Ressourcen der ersten Vorrichtung Ressourcen abdecken, die von jedem des einen oder der mehreren zweiten intelligenten Modelle benötigt werden, und n eine ganze Zahl größer als 1 ist; und

Auswählen (602) eines zweiten intelligenten Modells für die erste Vorrichtung aus dem dritten Modellsatz, der der ersten Vorrichtung entspricht, basierend auf dem ersten intelligenten Modell, umfassend:

Erfassen, basierend auf dem zweiten Probensatz, von Differenzinformationen zwischen dem ersten intelligenten Modell und jedem des einen oder der mehreren zweiten intelligenten Modelle in dem dritten Modellsatz, der der ersten Vorrichtung entspricht, umfassend:

Erfassen eines vierten Ausgabeergebnisses, das jeder der zweiten Trainingsproben in dem zweiten Probensatz entspricht, die durch das erste intelligente Modell ausgegeben werden, durch Eingeben jeder der zweiten Trainingsproben in das erste intelligente Modell;

Erfassen eines fünften Ausgabeergebnisses, das jeder der zweiten Trainingsproben in dem zweiten Probensatz entspricht, die durch ein intelligentes Zielmodell ausgegeben werden, durch Eingeben jeder der zweiten Trainingsproben in das intelligente Zielmodell, wobei das intelligente Zielmodell eines des einen oder der mehreren zweiten intelligenten Modelle in dem dritten Modellsatz ist, der der ersten Vorrichtung entspricht; und

Erfassen von Differenzinformationen zwischen dem ersten intelligenten Modell und dem intelligenten Zielmodell basierend auf dem vierten Ausgabeergebnis und dem fünften Ausgabeergebnis, die jeder der zweiten Trainingsproben entsprechen; und

Auswählen eines zweiten intelligenten Modells aus dem einen oder den mehreren zweiten intelligenten Modellen in dem dritten Modellsatz basierend auf den Differenzinformationen zwischen dem ersten intelligenten Modell und jedem des einen oder der mehreren zweiten intelligenten Modelle in dem dritten Modellsatz.

2. Verfahren nach Anspruch 1, wobei das Erhalten (302) des ersten Modellsatzes durch Trainieren jedes neuronalen Netzwerks in dem ersten Netzwerksatz basierend auf dem ersten Probensatz und dem zweiten Probensatz umfasst:

für ein beliebiges zu trainierendes neuronales Netzwerk in dem ersten Netzwerksatz, Trainieren (3021), basierend auf dem ersten Probensatz, von Parametern einer Faltungsschicht und Parametern einer vollständig verbundenen Schicht, die in dem zu trainierenden neuronalen Netzwerk enthalten sind, wobei Werte der trainierten Parameter der Faltungsschicht erste Parameterwerte sind und Werte der trainierten Parameter der vollständig verbundenen Schicht zweite Parameterwerte sind;

Trainieren (3022), mit Fixieren der Werte der Parameter der Faltungsschicht auf die ersten Parameterwerte, der Parameter der vollständig verbundenen Schicht, die in dem zu trainierenden neuronalen Netzwerk enthalten sind, basierend auf dem ersten Probensatz und dem zweiten Probensatz, um die Werte der trainierten Parameter der vollständig verbundenen Schicht von den zweiten Parameterwerten zu dritten Parameterwerten zu ändern;

und

Trainieren (3023), mit Fixieren der Werte der Parameter der vollständig verbundenen Schicht auf die dritten Parameterwerte, der Parameter der Faltungsschicht in dem zu trainierenden neuronalen Netzwerk basierend auf dem ersten Probensatz und dem zweiten Probensatz, um ein intelligentes Modell zu erhalten, das dem zu trainierenden neuronalen Netzwerk entspricht.

3. Verfahren nach Anspruch 2, wobei das Trainieren (3022) der Parameter der vollständig verbundenen Schicht, die in dem zu trainierenden neuronalen Netzwerk enthalten sind, basierend auf dem ersten Probensatz und dem zweiten Probensatz umfasst:

für jede der ersten Trainingsproben in dem ersten Probensatz, Erfassen eines ersten Ausgabeergebnisses, das der ersten Trainingsprobe entspricht, die von dem zu trainierenden neuronalen Netzwerk ausgegeben wird, durch Eingeben der ersten Trainingsprobe in das zu trainierende neuronale Netzwerk, und für jede der zweiten Trainingsproben in dem zweiten Probensatz, Erfassen eines ersten Ausgabeergebnisses, das der zweiten Trainingsprobe entspricht, durch Eingeben der zweiten Trainingsprobe in das zu trainierende neuronale Netzwerk;

Erfassen eines ersten Verlustfunktionswerts durch eine erste Verlustfunktion basierend auf dem ersten Ausgabeergebnis, das jeder der ersten Trainingsproben entspricht, und der Markierung, die in jeder der ersten Trainingsproben enthalten ist, und Erfassen eines zweiten Verlustfunktionswerts durch eine Distanzverlustfunktion basierend auf dem ersten Ausgabeergebnis, das jeder der zweiten Trainingsproben entspricht, wobei die erste Verlustfunktion eine andere Verlustfunktion als die Distanzverlustfunktion umfasst; und

wenn ein Verlustfunktionswert der vollständig verbundenen Schicht nicht minimal ist, Anpassen der Werte von Parametern der vollständig verbundenen Schicht basierend auf dem Verlustfunktionswert der vollständig verbundenen Schicht, wobei der Verlustfunktionswert der vollständig verbundenen Schicht den ersten Verlustfunktionswert und den zweiten Verlustfunktionswert umfasst.

4. Verfahren nach Anspruch 3, wobei das Trainieren (3023) der Parameter der Faltungsschicht in dem zu trainierenden neuronalen Netzwerk basierend auf dem ersten Probensatz und dem zweiten Probensatz umfasst:

für jede der ersten Trainingsproben in dem ersten Probensatz, Erfassen eines zweiten Ausgabeergebnisses, das der ersten Trainingsprobe entspricht, die von dem zu trainierenden neuronalen Netzwerk ausgegeben wird, durch Eingeben der ersten Trainingsprobe in das zu trainierende neuronale Netzwerk, und für jede der zweiten Trainingsproben in dem zweiten Probensatz, Erfassen eines zweiten Ausgabeergebnisses, das der zweiten Trainingsprobe entspricht, durch Eingeben der zweiten Trainingsprobe in das zu trainierende neuronale Netzwerk;

Erfassen eines dritten Verlustfunktionswerts durch die erste Verlustfunktion basierend auf dem zweiten Ausgabeergebnis, das jeder der ersten Trainingsproben entspricht, und der Markierung, die in jeder der ersten Trainingsproben enthalten ist, und Erfassen eines vierten Verlustfunktionswerts durch die Distanzverlustfunktion basierend auf dem zweiten Ausgabeergebnis, das jeder der zweiten Trainingsproben entspricht; und

wenn ein Verlustfunktionswert der Faltungsschicht nicht minimal ist, Anpassen der Werte von Parametern der Faltungsschicht basierend auf dem Verlustfunktionswert der Faltungsschicht, wobei der Verlustfunktionswert der Faltungsschicht den dritten Verlustfunktionswert und den vierten Verlustfunktionswert umfasst.

5. Verfahren nach einem der Ansprüche 1 bis 4, wobei das Verfahren auf ein System mit einer Architektur für Zentralrechnen-Edge-Vorrichtungen (Randvorrichtungen) angewendet wird,

das System eine zentrale Vorrichtung und eine Vielzahl von intelligenten Edge-Vorrichtungen umfasst, die intelligenten Edge-Vorrichtungen in unterschiedlichen Bereichen eingesetzt werden und sowohl Rechenleistung als auch Speicherkapazität der zentralen Vorrichtung größer als Rechenleistung und Speicherkapazität jeder der intelligenten Edge-Vorrichtungen ist,

das Verfahren durch die zentrale Vorrichtung durchgeführt wird und die zweiten Trainingsproben in dem zweiten Probensatz Daten umfassen, die von jeder der intelligenten Edge-Vorrichtungen gesammelt und von der zentralen Vorrichtung empfangen werden.

6. Vorrichtung (700) zum Trainieren eines intelligenten Modells, umfassend:

ein Erfassungsmodul (701), das eingerichtet ist, einen ersten Netzwerksatz und einen zweiten Netzwerksatz von einem ersten neuronalen Netzwerk zu erfassen, wobei der erste Netzwerksatz das erste neuronale Netzwerk und m-1 zweite neuronale Netzwerke in dem ersten Netzwerksatz umfasst, m eine ganze Zahl größer als 1 ist, der zweite Netzwerksatz m zweite neuronale Netzwerke in dem zweiten Netzwerksatz umfasst, die m-1 zweiten neuronalen Netzwerke in dem ersten Netzwerksatz und die m zweiten neuronalen Netzwerke in dem zweiten Netzwerksatz unterschiedliche Teilnetzwerke in dem ersten neuronalen Netzwerk sind und eine Netzwerkgröße jedes neuronalen Netzwerks in dem ersten Netzwerksatz größer als eine Netzwerkgröße jedes neuronalen Netzwerks in dem zweiten Netzwerksatz ist;

ein erstes Trainingsmodul (702), das eingerichtet ist, einen ersten Modellsatz durch Trainieren jedes neuronalen Netzwerks in dem ersten Netzwerksatz basierend auf einem ersten Probensatz und einem zweiten Probensatz zu erhalten, wobei der erste Probensatz eine Vielzahl von ersten Trainingsproben umfasst, jede der ersten Trainingsproben erste Trainingsdaten und eine Markierung zum Angeben eines Ziels in den ersten Trainingsdaten umfasst, der zweite Probensatz eine Vielzahl von zweiten Trainingsproben umfasst, jede der zweiten Trainingsproben unmarkierte zweite Trainingsdaten umfasst und der erste Modellsatz ein erstes intelligentes Modell, das durch Trainieren des ersten neuronalen Netzwerks erhalten wird, und m-1 zweite intelligente Modelle, die durch Trainieren der m-1 zweiten neuronalen Netzwerke in dem ersten Netzwerksatz erhalten werden, umfasst; und

ein zweites Trainingsmodul (703), das eingerichtet ist, einen zweiten Modellsatz durch Trainieren jedes neuronalen Netzwerks in dem zweiten Netzwerksatz basierend auf dem ersten Probensatz, dem zweiten Probensatz und dem ersten Modellsatz zu erhalten, wobei der zweite Modellsatz m zweite intelligente Modelle umfasst, die durch Trainieren der m zweiten neuronalen Netzwerke in dem zweiten Netzwerksatz erhalten werden, umfassend:

für jedes der intelligenten Modelle in dem ersten Modellsatz, Erfassen einer Vielzahl von dritten Ausgabeergebnissen, die jeder der zweiten Trainingsproben in dem zweiten Probensatz entsprechen, die durch das intelligente Modell ausgegeben werden, durch Eingeben jeder der zweiten Trainingsproben in das intelligente Modell;

für jede der zweiten Trainingsproben, Erfassen einer Markierung für die zweite Trainingsprobe basierend auf der Vielzahl von dritten Ausgabeergebnissen, die der zweiten Trainingsprobe entsprechen; und

Erhalten des zweiten Modellsatzes durch Trainieren jedes neuronalen Netzwerks in dem zweiten Netzwerksatz basierend auf dem ersten Probensatz, jeder der zweiten Trainingsproben und der Markierung für jede der zweiten Trainingsproben;

wobei die Vorrichtung ferner ein Bestimmungsmodul und ein Auswahlmodul umfasst, das Bestimmungsmodul eingerichtet ist, einen dritten Modellsatz, der jeder ersten Vorrichtung entspricht, basierend auf Ressourceninformationen der ersten Vorrichtung zu bestimmen, wobei der dritte Modellsatz, der der ersten Vorrichtung entspricht, ein oder mehrere der zweiten intelligenten Modelle aus dem zweiten Modellsatz umfasst und Ressourcen der ersten Vorrichtung Ressourcen abdecken, die von jedem des einen oder der mehreren zweiten intelligenten Modelle benötigt werden, und n eine ganze Zahl größer als 1 ist; und

das Auswahlmodul eingerichtet ist, ein zweites intelligentes Modell für die erste Vorrichtung aus dem dritten Modellsatz, der der ersten Vorrichtung entspricht,

basierend auf dem ersten intelligenten Modell auszuwählen, umfassend:

Erfassen, basierend auf dem zweiten Probensatz, von Differenzinformationen zwischen dem ersten intelligenten Modell und jedem des einen oder der mehreren zweiten intelligenten Modelle in dem dritten Modellsatz, der der ersten Vorrichtung entspricht, umfassend:

Erfassen eines vierten Ausgabeergebnisses, das jeder der zweiten Trainingsproben in dem zweiten Probensatz entspricht, die durch das erste intelligente Modell ausgegeben werden, durch Eingeben jeder der zweiten Trainingsproben in das erste intelligente Modell;

Erfassen eines fünften Ausgabeergebnisses, das jeder der zweiten Trainingsproben in dem zweiten Probensatz entspricht, die durch ein intelligentes Zielmodell ausgegeben werden, durch Eingeben jeder der zweiten Trainingsproben in das intelligente Zielmodell, wobei das intelligente Zielmodell eines des einen oder der mehreren zweiten intelligenten Modelle in dem dritten Modellsatz ist, der der ersten Vorrichtung entspricht; und

Erfassen von Differenzinformationen zwischen dem ersten intelligenten Modell und dem intelligenten Zielmodell basierend auf dem vierten Ausgabeergebnis und dem fünften Ausgabeergebnis, die jeder der zweiten Trainingsproben entsprechen; und

Auswählen eines zweiten intelligenten Modells aus dem einen oder den mehreren zweiten intelligenten Modellen in dem dritten Modellsatz basierend auf den Differenzinformationen zwischen dem ersten intelligenten Modell und jedem des einen oder der mehreren zweiten intelligenten Modelle in dem dritten Modellsatz.

7. Elektronische Vorrichtung (800), umfassend einen Prozessor (801) und einen Speicher (802);

wobei der Speicher (802) eingerichtet ist, maschinenausführbare Anweisungen zu speichern; und der Prozessor (801) eingerichtet ist, die in dem Speicher gespeicherten maschinenausführbaren Anweisungen zu lesen und auszuführen, um das Verfahren nach einem der Ansprüche 1 bis 5 auszuführen.

8. Maschinenlesbares Speichermedium, wobei maschinenausführbare Anweisungen in dem maschinenlesbaren Speichermedium gespeichert sind und die maschinenausführbaren Anweisungen, wenn sie von einem Prozessor ausgeführt werden, das Verfahren nach einem der Ansprüche 1 bis 5 realisieren.

## Revendications

1. Procédé d'entraînement d'un modèle intelligent mis en œuvre par ordinateur, comprenant :

l'acquisition (301) d'un premier ensemble de réseaux et d'un second ensemble de réseaux à partir d'un premier réseau neuronal, dans lequel le premier ensemble de réseaux comprend le premier réseau neuronal et m-1 seconds réseaux neuronaux dans le premier ensemble de réseaux, m est un entier supérieur à 1, le second ensemble de réseaux comprend m seconds réseaux neuronaux dans le second ensemble de réseaux, les m-1 seconds réseaux neuronaux dans le premier ensemble de réseaux et les m seconds réseaux neuronaux dans le second ensemble de réseaux sont des sous-réseaux différents dans le premier réseau neuronal, et une taille de réseau de chaque réseau neuronal dans le premier ensemble de réseaux est supérieure à une taille de réseau de chaque réseau neuronal dans le second ensemble de réseaux ;
l'obtention (302) d'un premier ensemble de modèles par entraînement de chaque réseau neuronal dans le premier ensemble de réseaux sur la base d'un premier ensemble d'échantillons et d'un second ensemble d'échantillons, dans lequel le premier ensemble d'échantillons comprend une pluralité de premiers échantillons d'entraînement, chacun des premiers échantillons d'entraînement comprend des premières données d'entraînement et une étiquette pour indiquer une cible dans les premières données d'entraînement, le second ensemble d'échantillons comprend une pluralité de seconds échantillons d'entraînement, chacun des seconds échantillons d'entraînement comprend des secondes données d'entraînement non étiquetées, et le premier ensemble de modèles comprend un premier modèle intelligent obtenu par entraînement du premier réseau neuronal et m-1 seconds modèles intelligents obtenus par entraînement des m-1 seconds réseaux neuronaux dans le premier ensemble de réseaux ; et
l'obtention (303) d'un second ensemble de modèles par entraînement de chaque réseau neuronal dans le second ensemble de réseaux sur la base du premier ensemble d'échantillons, du second ensemble d'échantillons et du premier ensemble de modèles, dans lequel le second ensemble de modèles comprend m seconds modèles intelligents obtenus par entraînement des m seconds réseaux neuronaux dans le second ensemble de réseaux, comprenant :

pour chacun des modèles intelligents dans le premier ensemble de modèles, l'acquisition (3031) d'une pluralité de troisièmes résultats de sortie correspondant à chacun des seconds échantillons d'entraînement dans le second ensemble d'échantillons délivrés en sortie par le modèle intelligent en entrant chacun des seconds échantillons d'entraînement dans le modèle intelligent ;
pour chacun des seconds échantillons d'entraînement, l'acquisition (3032) d'une étiquette pour le second échantillon d'entraînement sur la base de la pluralité de troisièmes résultats de sortie correspondant au second échantillon d'entraînement ; et
l'obtention (3033) du second ensemble de modèles par entraînement de chaque réseau neuronal dans le second ensemble de réseaux sur la base du premier ensemble d'échantillons, de chacun des seconds échantillons d'entraînement, et de l'étiquette pour chacun des seconds échantillons d'entraînement ;

le procédé comprenant en outre : pour chacun de n premiers dispositifs,
la détermination d'un troisième ensemble de modèles correspondant à chaque dit premier dispositif sur la base d'informations de ressources du premier dispositif, dans lequel le troisième ensemble de modèles correspondant au premier dispositif comprend un ou plusieurs des seconds modèles intelligents à partir du second ensemble de modèles, et des ressources du premier dispositif couvrent des ressources requises par chacun des un ou plusieurs seconds modèles intelligents, et n est un entier supérieur à 1 ; et

la sélection (602) d'un second modèle intelligent pour le premier dispositif à partir du troisième ensemble de modèles correspondant au premier dispositif sur la base du premier modèle intelligent, comprenant :
l'acquisition, sur la base du second ensemble d'échantillons, d'informations de différence entre le premier modèle intelligent et chacun des un ou plusieurs seconds modèles intelligents dans le troisième ensemble de modèles correspondant au premier dispositif, comprenant :

l'acquisition d'un quatrième résultat de sortie correspondant à chacun des seconds échantillons d'entraînement dans le second ensemble d'échantillons délivrés en sortie par le premier modèle intelligent en entrant chacun des seconds échantillons d'entraînement dans le premier modèle intelligent ;

l'acquisition d'un cinquième résultat de sortie correspondant à chacun des seconds échantillons d'entraînement dans le second ensemble d'échantillons délivrés en sortie par un modèle intelligent cible en entrant chacun des seconds échantillons d'entraînement dans le modèle intelligent cible, dans lequel le modèle intelligent cible est l'un des un ou plusieurs seconds modèles intelligents dans le troisième ensemble de modèles correspondant au premier dispositif ; et

l'acquisition d'informations de différence entre le premier modèle intelligent et le modèle intelligent cible sur la base du quatrième résultat de sortie et du cinquième résultat de sortie correspondant à chacun des seconds échantillons d'entraînement ; et la sélection d'un second modèle intelligent parmi les un ou plusieurs seconds modèles intelligents dans le troisième ensemble de modèles sur la base des informations de différence entre le premier modèle intelligent et chacun des un ou plusieurs seconds modèles intelligents dans le troisième ensemble de modèles.

2. Procédé selon la revendication 1, dans lequel l'obtention (302) du premier ensemble de modèles en entraînant chaque réseau neuronal dans le premier ensemble de réseaux sur la base du premier ensemble d'échantillons et du second ensemble d'échantillons comprend :

pour n'importe quel réseau neuronal à entraîner dans le premier ensemble de réseaux, l'entraînement (3021), sur la base du premier ensemble d'échantillons, de paramètres d'une couche convolutive et de paramètres d'une couche entièrement connectée comprise dans le réseau neuronal à entraîner, dans lequel des valeurs des paramètres entraînés de la couche convolutive sont des premières valeurs de paramètre et des valeurs des paramètres entraînés de la couche entièrement connectée sont des secondes valeurs de paramètre ;
l'entraînement (3022), avec la fixation des valeurs des paramètres de la couche convolutive aux premières valeurs de paramètre, des paramètres de la couche entièrement connectée comprise dans le réseau neuronal à entraîner sur la base du premier ensemble d'échantillons et du second ensemble d'échantillons, de manière à changer les valeurs des paramètres entraînés de la couche entièrement connectée des secondes valeurs de paramètre à des troisièmes valeurs de paramètre ; et
l'entraînement (3023), avec la fixation des valeurs des paramètres de la couche entièrement connectée aux troisièmes valeurs de paramètre, des paramètres de la couche convolutive dans le réseau neuronal à entraîner sur la base du premier ensemble d'échantillons et du second ensemble d'échantillons, de manière à obtenir un modèle intelligent correspondant au réseau neuronal à entraîner.

3. Procédé selon la revendication 2, dans lequel l'entraînement (3022) des paramètres de la couche entièrement connectée comprise dans le réseau neuronal à entraîner sur la base du premier ensemble d'échantillons et du second ensemble d'échantillons comprend :

pour chacun des premiers échantillons d'entraînement dans le premier ensemble d'échantillons, l'acquisition d'un premier résultat de sortie correspondant au premier échantillon d'entraînement délivré en sortie par le réseau neuronal à entraîner en entrant le premier échantillon d'entraînement dans le réseau neuronal à entraîner, et pour chacun des seconds échantillons d'entraînement dans le second ensemble d'échantillons, l'acquisition d'un premier résultat de sortie correspondant au second échantillon d'entraînement en entrant le second échantillon d'entraînement dans le réseau neuronal à entraîner ;
l'acquisition d'une première valeur de fonction de perte par l'intermédiaire d'une première fonction de perte sur la base du premier résultat de sortie correspondant à chacun des premiers échantillons d'entraînement et de l'étiquette comprise dans chacun des premiers échantillons d'entraînement, et l'acquisition d'une seconde valeur de fonction de perte par l'intermédiaire d'une fonction de perte de distance sur la base du premier résultat de sortie correspondant à chacun des seconds échantillons d'entraînement, dans lequel la première fonction de perte comprend une fonction de perte autre que la fonction de perte de distance ; et
lorsqu'une valeur de fonction de perte de la couche entièrement connectée n'est pas minimale, l'ajustement des valeurs de paramètres de la couche entièrement connectée sur la base de la valeur de fonction de perte de la couche entièrement connectée, dans lequel la valeur de fonction de perte de la couche entièrement connectée comprend la première valeur de fonction de perte et la seconde valeur de fonction de perte.

4. Procédé selon la revendication 3, dans lequel l'entraînement (3023) des paramètres de la couche convolutive dans le réseau neuronal à entraîner sur la base du premier ensemble d'échantillons et du second ensemble d'échantillons comprend :

pour chacun des premiers échantillons d'entraînement dans le premier ensemble d'échantillons, l'acquisition d'un second résultat de sortie correspondant au premier échantillon d'entraînement délivré en sortie par le réseau neuronal à entraîner en entrant le premier échantillon d'entraînement dans le réseau neuronal à entraîner, et pour chacun des seconds échantillons d'entraînement dans le second ensemble d'échantillons, l'acquisition d'un second résultat de sortie correspondant au second échantillon d'entraînement en entrant le second échantillon d'entraînement dans le réseau neuronal à entraîner ;

l'acquisition d'une troisième valeur de fonction de perte par l'intermédiaire de la première fonction de perte sur la base du second résultat de sortie correspondant à chacun des premiers échantillons d'entraînement et de l'étiquette comprise dans chacun des premiers échantillons d'entraînement, et l'acquisition d'une quatrième valeur de fonction de perte par l'intermédiaire de la fonction de perte de distance sur la base du second résultat de sortie correspondant à chacun des seconds échantillons d'entraînement ; et

lorsqu'une valeur de fonction de perte de la couche convolutive n'est pas minimale, l'ajustement des valeurs de paramètres de la couche convolutive sur la base de la valeur de fonction de perte de la couche convolutive, dans lequel la valeur de fonction de perte de la couche convolutive comprend la troisième valeur de fonction de perte et la quatrième valeur de fonction de perte.

5. Procédé selon l'une quelconque des revendications 1 à 4, dans lequel le procédé est appliqué à un système avec une architecture de dispositifs périphériques informatiques centraux,

le système comprend un dispositif central et une pluralité de dispositifs intelligents périphériques, les dispositifs intelligents périphériques sont déployés dans différentes zones, et la puissance de calcul et la capacité de stockage du dispositif central sont toutes deux supérieures à la puissance de calcul et à la capacité de stockage de chacun des dispositifs intelligents périphériques,

le procédé est réalisé par le dispositif central, et les seconds échantillons d'entraînement dans le second ensemble d'échantillons comprennent des données collectées par chacun des dispositifs intelligents périphériques et reçues par le dispositif central.

6. Appareil (700) d'entraînement d'un modèle intelligent, comprenant :

un module d'acquisition (701), configuré pour acquérir un premier ensemble de réseaux et un second ensemble de réseaux à partir d'un premier réseau neuronal, dans lequel le premier ensemble de réseaux comprend le premier réseau neuronal et m-1 seconds réseaux neuronaux dans le premier ensemble de réseaux, m est un entier supérieur à 1, le second ensemble de réseaux comprend m seconds réseaux neuronaux dans le second ensemble de réseaux, les m-1 seconds réseaux neuronaux dans le premier ensemble de réseaux et les m seconds réseaux neuronaux dans le second ensemble de réseaux sont des sous-réseaux différents dans le premier réseau neuronal, et une taille de réseau de chaque réseau neuronal dans le premier ensemble de réseaux est supérieure à une taille de réseau de chaque réseau neuronal dans le second ensemble de réseaux ;

un premier module d'entraînement (702), configuré pour obtenir un premier ensemble de modèles par entraînement de chaque réseau neuronal dans le premier ensemble de réseaux sur la base d'un premier ensemble d'échantillons et d'un second ensemble d'échantillons, dans lequel le premier ensemble d'échantillons comprend une pluralité de premiers échantillons d'entraînement, chacun des premiers échantillons d'entraînement comprend des premières données d'entraînement et une étiquette pour indiquer une cible dans les premières données d'entraînement, le second ensemble d'échantillons comprend une pluralité de seconds échantillons d'entraînement, chacun des seconds échantillons d'entraînement comprend des secondes données d'entraînement non étiquetées, et le premier ensemble de modèles comprend un premier modèle intelligent obtenu par entraînement du premier réseau neuronal et m-1 seconds modèles intelligents obtenus par entraînement des m-1 seconds réseaux neuronaux dans le premier ensemble de réseaux ; et

un second module d'entraînement (703), configuré pour obtenir un second ensemble de modèles par entraînement de chaque réseau neuronal dans le second ensemble de réseaux sur la base du premier ensemble d'échantillons, du second ensemble d'échantillons et du premier ensemble de modèles, dans lequel le second ensemble de modèles comprend m seconds modèles intelligents obtenus par entraînement des m seconds réseaux neuronaux dans le second ensemble de réseaux, comprenant :

pour chacun des modèles intelligents dans le premier ensemble de modèles, l'acquisition d'une pluralité de troisièmes résultats de sortie correspondant à chacun des seconds échantillons d'entraînement dans le second ensemble d'échantillons délivrés en sortie par le modèle intelligent en entrant chacun des seconds échantillons d'entraînement dans le modèle intelligent ;

pour chacun des seconds échantillons d'entraînement, l'acquisition d'une étiquette pour le second échantillon d'entraînement sur la base de la pluralité de troisièmes résultats de sortie correspondant au second échantillon d'entraînement ; et

l'obtention du second ensemble de modèles par entraînement de chaque réseau neuronal dans le second ensemble de réseaux sur la base du premier ensemble d'échantillons, de chacun des seconds échantillons d'entraînement, et de l'étiquette pour chacun des seconds échantillons d'entraînement ;

dans lequel l'appareil comprend en outre un module de détermination et un module de sélection,

le module de détermination est configuré pour déterminer un troisième ensemble de modèles correspondant à chaque dit premier dispositif sur la base d'informations de ressources du premier dispositif, dans lequel le troisième ensemble de modèles correspondant au premier dispositif comprend un ou plusieurs des seconds modèles intelligents à partir du second ensemble de modèles, et des ressources du premier dispositif couvrent des ressources requises par chacun des un ou plusieurs seconds modèles intelligents, et n est un entier supérieur à 1 ; et

le module de sélection est configuré pour sélectionner un second modèle intelligent pour le premier dispositif à partir du troisième ensemble de modèles correspondant au premier dispositif sur la base du premier modèle intelligent, comprenant :

l'acquisition, sur la base du second ensemble d'échantillons, d'informations de différence entre le premier modèle intelligent et chacun des un ou plusieurs seconds modèles intelligents dans le troisième ensemble de modèles correspondant au premier dispositif, comprenant :

l'acquisition d'un quatrième résultat de sortie correspondant à chacun des seconds échantillons d'entraînement dans le second ensemble d'échantillons délivrés en sortie par le premier modèle intelligent en entrant chacun des seconds échantillons d'entraînement dans le premier modèle intelligent ;

l'acquisition d'un cinquième résultat de sortie correspondant à chacun des seconds échantillons d'entraînement dans le second ensemble d'échantillons délivrés en sortie par un modèle intelligent cible en entrant chacun des seconds échantillons d'entraînement dans le modèle intelligent cible, dans lequel le modèle intelligent cible est l'un des un ou plusieurs seconds modèles intelligents dans le troisième ensemble de modèles correspondant au premier dispositif ; et

l'acquisition d'informations de différence entre le premier modèle intelligent et le modèle intelligent cible sur la base du quatrième résultat de sortie et du cinquième résultat de sortie correspondant à chacun des seconds échantillons d'entraînement ; et

la sélection d'un second modèle intelligent parmi les un ou plusieurs seconds modèles intelligents dans le troisième ensemble de modèles sur la base des informations de différence entre le premier modèle intelligent et chacun des un ou plusieurs seconds modèles intelligents dans le troisième ensemble de modèles.

7. Dispositif électronique (800), comprenant un processeur (801) et une mémoire (802) ;

dans lequel la mémoire (802) est configurée pour stocker des instructions exécutables par machine ; et
le processeur (801) est configuré pour lire et exécuter les instructions exécutables par machine stockées dans la mémoire afin de mettre en œuvre le procédé selon l'une quelconque des revendications 1 à 5.

8. Support de stockage lisible par machine, dans lequel des instructions exécutables par machine sont stockées dans le support de stockage lisible par machine, et les instructions exécutables par machine, lorsqu'elles sont exécutées par un processeur, réalisent le procédé selon l'une quelconque des revendications 1 à 5.

FIG. 1

FIG. 2

FIG. 3

| Acquire a first network set and a second network set from a first neural network | 301 |

↓

| Obtain a first model set by training each neural network in the first network set based on a first sample set and a second sample set | 302 |

↓

| Obtain a second model set by training each neural network in the second network set based on the first sample set, the second sample set and the first model set | 303 |

FIG. 4

| Train, based on the first sample set, parameters of a convolutional layer and parameters of a fully connected layer included in a to-be-trained neural network, where the to-be-trained neural network is any one of the neural networks in the first network set, values of the trained parameters of the convolutional layer are first parameter values and values of the trained parameters of the fully connected layer are second parameter values | 3021 |

↓

| Train, with fixing the values of the parameters of the convolutional layer in the to-be-trained neural network to the first parameter values and based on the first sample set and the second sample set, the parameters of the fully connected layer included in the to-be-trained neural network, so to change the values of the trained parameters of the fully connected layer from the second parameter values to third parameter values | 3022 |

↓

| Train, with fixing the values of the parameters of the fully connected layer (multiple classifiers in the fully connected layer) in the to-be-trained neural network to the third parameter values and based on the first sample set and the second sample set, the parameters of the convolutional layer (feature extractor) in the to-be-trained neural network, so to obtain an intelligent model corresponding to the to-be-trained neural network | 3023 |

FIG. 5

For each second training sample in the second sample set, acquire a plurality of third output results corresponding to the second training sample output from each intelligent model in the first model set, by inputting the second training sample into the each intelligent model ⌐3031

For the each second training sample, acquire a label for the second training sample based on the plurality of third output results corresponding to the second training sample ⌐3032

Obtain the second model set by training each neural network in the second network set based on the first sample set, the each second training sample, and the label for the each second training sample ⌐3033

FIG. 6

Determine, based on resource information of n devices, n third model sets, where the n devices are in one-to-one correspondence with the n third model sets ⌐601

Select, based on the first intelligent model and from a third model set corresponding to a first device, a second intelligent model for the first device ⌐602

FIG. 7

700

Acquiring module ⌐701

First training module ⌐702

Second training module ⌐703

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 112070207 A
- CN 114118236 A
- CN 107851213 A

### Non-patent literature cited in the description

- LCS-EnsemNet: A Semisupervised Deep Neural Network for SAR Image Change Detection With Dual Feature Extraction and Label-Consistent Self-Ensemble. **WANG JIAN et al.** IEEE JOURNAL OF SELECTED TOPICS IN APPLIED EARTH OBSERVATIONS AND REMOTE SENSING. IEEE, 26 October 2021, vol. 14, 11903-11925